# EUROPEAN PATENT SPECIFICATION

(11) **EP 4 189 253 B1**
(45) Date of publication and mention of the grant of the patent: **23.04.2025**
(21) Application number: 21849191.8
(22) Date of filing: 30.07.2021
(51) Int. Cl.: F04F 5/54, F04F 5/24, F04F 5/48, F04F 1/02

(54) **CONSTANT FLOW SOLIDS PUMP**
FESTSTOFFPUMPE MIT KONSTANTEM DURCHFLUSS
POMPE À SOLIDES À ÉCOULEMENT CONSTANT

(30) Priority: 31.07.2020 AU 2020210306
(43) Date of publication of application: 07.06.2023
(73) Proprietor: Solidsvac Pty Ltd, Woorim, QLD 4507 (AU)
(72) Inventor: KROHN, Mark Damien, WOORIM, Queensland 4507 (AU)
(74) Representative: Friderichs, Gunther
(86) International application number: PCT/AU2021/050832
(87) International publication number: WO 2022/020903

(56) References cited:
- EP-B1- 2 931 331
- WO-A1-02/40870
- WO-A1-95/18685
- WO-A1-95/18685
- WO-A2-00/71222
- US-A1- 2006 196 884
- US-A1- 2006 196 884
- US-A1- 2010 196 169
- US-A1- 2011 091 333
- US-A1- 2013 032 396
- US-A1- 2015 034 176
- US-A1- 2017 321 725
- US-A1- 2019 226 474
- US-B1- 7 257 940

## Description

### FIELD

This invention relates to pumping, including industrial pumping. More particularly, the invention relates to pneumatic pumping of flowable material containing relatively high solids content, although without limitation thereto. The invention can have particular application to pumping drilling mud or drilling oil, or other heterogenous, solid-laden slurries.

### BACKGROUND

Pneumatic pumps may be used for pumping flowable compositions in hot or chemically and/or physically harsh environments. Such pumping can be intractable to pumping using rotary, piston and diaphragm pumps, and may be required in environments where motive means such as internal combustion (IC) or electric motors cannot be effectively used.

Pneumatic pumps generally include a pressure vessel capable of cyclically transitioned between an intake cycle, wherein compressed air is used to lower the internal pressure of the vessel by venturi effect to draw material in, and a discharge cycle wherein the venturi is stalled or choked to pressurise the vessel and expel the material.

Maintaining consistent pumping flow can represent a significant challenge for pneumatic pumping. This can be especially difficult when pumping material that is inherently susceptible to stalling or clogging etc., such as material that is dense, sticky, or prone to congealing. Highly heterogenous material, such as slurries and the like containing relatively high solids content, present substantial challenges for consistent pneumatic pumping using existing equipment.

Another challenge in the context of pneumatic pumping relates to systemic pressure loss that can readily occur during movement or changes of components. Pressure loss can present considerable problems for maintaining consistent pumping, particularly where compressed air is used for both conveyance of material and control of pumping cycles.

With the above in mind, new approaches to pneumatic pumping would be desirable. It could be particularly desirable, in at least some circumstances, to develop new approaches effective for pneumatic pumping of materials containing relatively high solids content while maintaining consistent pumping flow. Pumping systems are known from WO95/18685. It is not known to deliver varying rates of gas flow , (lower) during pressurisation and (higher) during depressurisation.

The reference to prior art in the background is not, and should not be taken, as an acknowledgement or any form of suggestion that the referenced prior art forms part of common general knowledge worldwide or any particular jurisdiction.

### SUMMARY

The present invention is broadly directed to a pneumatic pump or pumping system adapted for substantially continuous pumping of heterogenous materials. The invention is solely defined by the features of the appended claims.

In a first aspect, the invention provides a pneumatic pump or pneumatic pumping system comprising:
a first pressure vessel; and a second pressure vessel;
a first pneumatic assembly in flowable connection with the first pressure vessel, the first pneumatic assembly comprising a first pneumatic assembly valve;
a second pneumatic assembly in flowable connection with the second pressure vessel, the second pneumatic assembly comprising a second pneumatic assembly valve;
a first transfer assembly in flowable connection with the first pressure vessel, the first transfer assembly comprising one or more first transfer assembly valves;
a second transfer assembly in flowable connection with the second pressure vessel, the second transfer assembly comprising one or more second transfer assembly valves; and
a controller for controlling the pneumatic pump or pumping system.

Suitably, the controller is for controlling the first pneumatic assembly valve and the second pneumatic assembly valve.

Suitably, the controller is for controlling the one or more first transfer assembly valves and the one or more second transfer assembly valves.

Suitably, the controller is adapted to cycle the pneumatic pump or pumping system between:
a first pumping cycle wherein the pneumatic pump or pumping system is configured to urge pumpable material towards the first pressure vessel and away from the second pressure vessel, and
a second pumping cycle wherein the pneumatic pump or pumping system is configured to urge pumpable material towards the second pressure vessel and away from the first pressure vessel.

Suitably, during the first pumping cycle:
the first pneumatic assembly is configured to depressurise the first pressure vessel,
the second pneumatic assembly is configured to pressurise the second pressure vessel,
the one or more valves of the first transfer assembly are configured to allow flow of pumpable material towards the first pressure vessel, and
the one or more valves of the second transfer assembly are configured to allow flow of pumpable material away from the second pressure vessel.

Suitably, during the second pumping cycle:
the first pneumatic assembly is configured to pressurise the first pressure vessel,
the second pneumatic assembly is configured to depressurise the second pressure vessel,
the one or more valves of the first transfer assembly are configured to allow flow of pumpable material away from the first pressure vessel, and
the one or more valves of the second transfer assembly are configured to allow flow of pumpable material towards the second pressure vessel.

Suitably, during the first pumping cycle:
the first pneumatic assembly valve of the first pneumatic assembly is open, and
the second pneumatic assembly valve of the second pneumatic assembly is closed.

Suitably, during the second pumping cycle:
the first pneumatic assembly valve of the first pneumatic assembly is closed, and
the second pneumatic assembly valve of the second pneumatic assembly is open.

In embodiments, the one or more first transfer assembly valves of the pneumatic pump or pumping system comprise a first inlet valve; and a first outlet valve.

In embodiments, the one or more second transfer assembly valves of the pneumatic pump or pumping system comprise a second inlet valve; and a second outlet valve.

In embodiments, during the first pumping cycle:
the first inlet valve of the first transfer assembly is open and the second inlet valve of the second transfer assembly is closed, and
the first outlet valve of the first transfer assembly is closed and the second outlet valve of the second transfer assembly is open.

In embodiments, during the second pumping cycle:
the first inlet valve of the first transfer assembly is closed and the second inlet valve of the second transfer assembly is open, and
the first outlet valve of the first transfer assembly is open and the outlet valve of the second transfer assembly is closed.

In embodiments of this aspect, the first pressure vessel of the pneumatic pump or pumping system comprises a first pressure port; and the second pressure vessel of the pneumatic pump or pumping system comprises a second pressure port.

Suitably, the first pneumatic assembly of the pneumatic pump or pumping system is in flowable connection with the first pressure vessel via the first pressure port; and the second pneumatic assembly of the pneumatic pump or pumping system is in flowable connection with the second pressure vessel via the second pressure port.

In embodiments, the first pressure port and the second pressure port are located towards respective upper portions of the first and second pressure vessels of the pneumatic pump or pumping system.

In embodiments, the first pressure vessel of the pneumatic pump or pumping system comprises a first transfer port; and the second pressure vessel of the pneumatic pump or pumping system comprises a second transfer port.

Suitably, the first transfer assembly of the pneumatic pump or pumping system is in flowable connection with the first pressure vessel via the first transfer port; and the second transfer assembly of the pneumatic pump or pumping system is in flowable connection with the second pressure vessel via the second transfer port.

In embodiments, the first transfer port and the second transfer port are located towards respective lower portions of the first and second pressure vessels.

The first pressure vessel and the second pressure vessel of the pneumatic pump or pumping system of this aspect may be of substantially the same structure, including size, shape, and/or component arrangement.

In embodiments, the first pressure vessel and the second pressure vessel are paired pressure vessels. The first pressure vessel and the second pressure vessel may be in a substantially mirrored or mirror-image arrangement.

In embodiments, the first pressure vessel and/or the second pressure vessel are of spherically-derived shape, such as disc-like shape. In embodiments, the first pressure vessel and/or the second pressure vessel comprise respective capacities of between about 25 and about 500 litres, or between about 50 and about 250 litres.

The first pneumatic assembly and the second pneumatic assembly of the pneumatic pump or pumping system of this aspect may be of substantially the same structure, including size, shape, and/or component arrangement.

In embodiments, the first pneumatic assembly and the second pneumatic assembly are paired pneumatic assemblies. The first pneumatic assembly and the second pneumatic assembly may be in a substantially mirrored or mirror-image arrangement.

In embodiments, the first pneumatic assembly and/or the second pneumatic assembly of the pneumatic pump or pumping system are venturi assemblies or the like, such as compressed air-operated venturi assemblies. In embodiments, the venturi assemblies are high demand venturi assemblies. In embodiments, the pneumatic assemblies comprise respective capacities of between about 10 and about 1500 CFM, or between about 40 and about 800 CFM.

In embodiments, the first pneumatic assembly of the pneumatic pump or pumping system comprises a first pneumatic valve actuator for converting the valve between an open and a closed configuration. In embodiments, the first pneumatic valve actuator is a pneumatic actuator. Suitably, the first pneumatic valve actuator is controllable by the controller of the pneumatic pump or pumping system.

In embodiments, the second pneumatic assembly comprises a second pneumatic valve actuator for converting the valve between an open and a closed configuration. In embodiments, the second pneumatic valve actuator is a pneumatic actuator. Suitably, the first pneumatic valve actuator is controllable by the controller of the pneumatic pump or pumping system.

The first transfer assembly and the second transfer assembly of the pneumatic pump or pumping system of this aspect may be of substantially the same structure, including size, shape, and/or component arrangement.

In embodiments, the first transfer assembly and the second transfer assembly are paired transfer assemblies. The first transfer assembly and the second transfer assembly may be in a substantially mirrored or mirror-image arrangement.

In embodiments, a first inlet and a first outlet of the first transfer assembly of the pneumatic pump or pumping system are in flowable connection with the first pressure vessel via a first branched conduit. Suitably, the first inlet comprises or is connected with the first inlet valve; and the first outlet comprises or is connected with the first outlet valve.

In embodiments, the first inlet valve and/or the first outlet valve of the first transfer assembly are rotatable valves, such as a quarter-turn valve. In embodiments, the first inlet valve and/or the first outlet valve are ball valves, such as two-way ball valves.

In embodiments, the first transfer assembly comprises a first transfer assembly actuator for converting the first inlet valve and the first outlet valve between respective open configurations and respective closed configurations. In embodiments, the first transfer assembly actuator is a pneumatic actuator. Suitably, the first transfer assembly actuator is controllable by the controller of the pneumatic pump or pumping system.

In embodiments, the first transfer assembly actuator is adapted to:
concurrently convert the first inlet valve to an open position and the first outlet valve to a closed position, and
concurrently convert the first inlet valve to a closed position and the first outlet valve to an open position.

In embodiments, a second inlet and a second outlet of the second transfer assembly of the pneumatic pump or pumping system are in flowable connection with the second pressure vessel via a second branched conduit. Suitably, the second inlet comprises or is connected with the second inlet valve; and the second outlet comprises or is connected with the second outlet valve.

In embodiments, the second inlet valve and/or the second outlet valve of the second transfer assembly are rotatable valves, such as a quarter-turn valves. In embodiments, the valves are ball valves, such as a two-way ball valves.

In embodiments, the second transfer assembly comprises a second transfer assembly actuator for converting the second inlet valve and the second outlet valve between respective open configurations and respective closed configurations. In embodiments, the second transfer assembly actuator is a pneumatic actuator. Suitably, the second transfer assembly actuator is controllable by the controller of the pneumatic pump or pumping system.

In embodiments, the second transfer assembly actuator is adapted to:
concurrently convert the second inlet valve to an open position and the second outlet valve to a closed position, and
concurrently convert the second inlet valve to a closed position and the second outlet valve to an open position.

The pneumatic pump or pumping system of this aspect may comprise a main pumping inlet conduit in flowable connection with the first transfer assembly and the second transfer assembly. Suitably, the main pumping inlet conduit is in flowable connection with the first inlet of the first transfer assembly and the second inlet of the second transfer assembly.

In embodiments, the main pumping inlet conduit of the pneumatic pump or pumping system is a branched conduit. Suitably, the main pumping inlet conduit is connectable with a hose or pipe or the like.

The pneumatic pump or pumping system of this aspect may comprise a main pumping outlet conduit in flowable connection with the first transfer assembly and the second transfer assembly. Suitably, the main pumping outlet conduit is in flowable connection with the first outlet of the first transfer assembly, and the second outlet of the second transfer assembly.

In embodiments, the main pumping outlet conduit of the pneumatic pump or pumping system is a branched conduit. Suitably, the main pumping outlet conduit is connectable with a hose or pipe or the like.

In embodiments, the controller of the pneumatic pump or pumping system of this aspect is a pneumatic controller. Suitably, the pneumatic controller comprises one or more solenoid valves and/or one or more pneumatic timers. In embodiments, the pneumatic controller comprises one or more of a pressure regulator; a pressure gauge; and a pneumatic filter.

In embodiments, the controller of the pneumatic pump or pumping system is connected to each of:
the first pneumatic valve actuator of the first pneumatic assembly; and
the second pneumatic valve actuator of the second pneumatic assembly.

In embodiments, the controller of the pneumatic pump or pumping system is connected to each of:
the first transfer assembly actuator of the first transfer assembly; and
the second transfer assembly actuator of the second transfer assembly.

Suitably, the pneumatic pump or pumping system of this aspect is adapted to receive a supply of pressurised gas. In embodiments, the pressurised gas is pressurised air.

In embodiments, the pneumatic pump or pumping system comprises, or is connectable with, a pressurised gas supply conduit via which pressurised gas is supplied to the pneumatic pump or pumping system.

Suitably, the pressurised gas supply conduit comprises, or is connected with, at least one pressurised gas supply valve. Suitably, the one or more pressurised gas supply valves are convertible between an open configuration wherein the valve allows the flow of pressurised gas therethrough, and a closed configuration wherein the valve constrains or prevents the flow of pressurised gas therethrough.

**In** embodiments, the pressurised gas supply conduit comprises a first pressurised gas supply valve; and a second pressurised gas supply valve.

**In** embodiments, the first pressurised gas supply valve is a manually operable valve. **In** embodiments, the first pressurised gas supply valve is a manually operable quarter-turn valve, such as a ball valve, e.g. a two-way ball valve.

**In** embodiments, the second pressurised gas supply valve is connected to a pneumatic pressurised gas valve actuator. Suitably, the pneumatic pressurised gas supply valve actuator is controllable by the controller of the pneumatic pump or pumping system.

In embodiments, the second pressurised gas supply valve is a quarter-turn valve, such as a ball valve, e.g. a two-way ball valve.

In embodiments, the pressurised gas supply conduit is in flowable connection with the controller of the pneumatic pump or pumping system. Suitably, the pressurised gas supply conduit is connected with the controller via a pressurised gas supply controller conduit. In embodiments, the pressurised gas supply controller conduit extends from a position between the first pressurised gas supply valve and the second pressurised gas supply valve.

In embodiments, the pneumatic pump or pumping system of this aspect comprises a main pressurised gas conduit. In embodiments, the main pressurised gas conduit comprises, or is connected or connectable with, the pressurised gas supply conduit.

Suitably, the main pressurised gas conduit is in flowable connection with the first pneumatic assembly and the second pneumatic assembly. In embodiments, the main pressurised gas conduit is in flowable connection with the controller.

The pneumatic pump or pumping system comprises a pressurised gas manifold. Suitably, the pressurised gas manifold comprises, or is connected or connectable with, the main pressurised gas conduit.

In embodiments, the pressurised gas manifold comprises a pneumatic assembly conduit in flowable connection with the main pressurised gas conduit.

In embodiments, the pressurised gas manifold comprises a pneumatic assembly conduit valve, wherein the pneumatic assembly conduit is in flowable connection with the main pressurised gas conduit via the pneumatic assembly conduit valve. In embodiments, the pneumatic assembly conduit valve is a rotatable valve, such as a quarter-turn valve. The rotatable valve may be a ball valve, such as a three-way ball valve.

In embodiments, the pressurised gas manifold comprises a pneumatic assembly conduit valve actuator for converting the pneumatic assembly conduit valve between a first configuration and a second configuration. In embodiments, the pneumatic assembly conduit valve actuator is a pneumatic actuator. Suitably, the pneumatic assembly conduit valve actuator is controllable by the controller of the pneumatic pump or pumping system.

The pressurised gas manifold comprises two pneumatic assembly conduits. Suitably, the two pneumatic assembly conduits comprise:
a depressurisation pneumatic assembly conduit, adapted to supply pressurised gas to the first or second pneumatic assembly for depressurising the first or second pressure vessel; and
a pressurisation pneumatic assembly conduit, adapted to supply pressurised gas to the first or second pneumatic assembly for pressurising the first or second pressure vessel.

In embodiments, the pressurised gas manifold comprises:
a depressurisation pneumatic assembly conduit and a pressurisation pneumatic assembly conduit;
a depressurisation pneumatic assembly conduit valve and a pressurisation pneumatic assembly conduit valve; and
a depressurisation pneumatic assembly conduit valve actuator and a pressurisation pneumatic assembly conduit valve actuator.

Suitably, during the first pumping cycle:
the depressurisation pneumatic assembly conduit valve is in a first configuration, wherein the valve is configured to direct pressurised gas through the depressurisation pneumatic assembly conduit into the first pneumatic assembly for depressurising the first pressure vessel, and
the pressurisation pneumatic assembly conduit valve is in a second configuration, where the valve is configured to direct pressurised gas through the pressurisation pneumatic assembly conduit into the second pneumatic assembly for pressurising the second pressure vessel.

Suitably, during the second pumping cycle:
the depressurisation pneumatic assembly conduit valve is in a second configuration, wherein the valve is configured to direct pressurised gas through the depressurisation pneumatic assembly conduit into the second pneumatic assembly for depressurising the second pressure vessel, and
the pressurisation pneumatic assembly conduit valve is in a first configuration, where the valve is configured to direct pressurised gas through the pressurisation pneumatic assembly conduit into the first pneumatic assembly for pressurising the first pressure vessel.

**In** embodiments wherein the pressurised gas manifold comprises a depressurisation pneumatic assembly conduit and a pressurisation pneumatic conduit, suitably, the pressurised gas manifold is adapted to deliver:
a relatively higher rate or volume of gas flow through the depressurisation pneumatic assembly conduit to the first or second pneumatic assembly, and
a relatively lower rate or volume of gas flow through the pressurisation pneumatic assembly conduit to the first or second pneumatic assembly.

In embodiments, the pressurisation pneumatic assembly conduit valve is adapted to restrict passage of gas through the pressurisation pneumatic assembly conduit valve relative to passage of gas through the depressurisation pneumatic assembly conduit valve.

In embodiments, the pressurisation pneumatic assembly conduit valve comprises an orifice plate to restrict passage of gas through the pressurisation pneumatic assembly conduit valve.

In embodiments, the pressurised gas manifold comprises a controller conduit in flowable connection with the main pressurised gas conduit. In embodiments, the pressurised gas manifold comprises a controller conduit valve, wherein the controller conduit is in flowable connection with the main pressurised gas conduit via the controller conduit valve. In embodiments, the controller conduit valve is a check valve.

In embodiments, the pneumatic pump or pumping system of this aspect comprises an exhaust component for receiving pressurised gas from the first pneumatic assembly and/or the second pneumatic assembly. Suitably, the exhaust component is adapted to decrease or attenuate noise of pressurised gas passing through the first pneumatic assembly and/or the second pneumatic assembly.

Suitably, the exhaust component is adapted to:
receive pressurised gas that passes through the first pneumatic assembly valve during the first pumping cycle, and/or
receive pressurised gas that passes through the second pneumatic assembly valve during the second pumping cycle.

In embodiments, the pneumatic pump or pumping system comprises a shared exhaust component, such as a shared exhaust box or the like.

In an embodiment, the pneumatic pump or pneumatic pumping system of the first aspect comprises:
a first substantially disc-shaped pressure vessel; and a second substantially disc-shaped pressure vessel;
a first venturi assembly comprising: a first venturi valve; and an actuator for the first venturi valve, the first venturi assembly in flowable connection with a pressure port located towards a top portion of the first pressure vessel;
a second venturi assembly comprising: a second venturi valve; and an actuator for the second venturi valve, the second venturi assembly in flowable connection with a pressure port located towards a top portion of the second pressure vessel;
an exhaust component in flowable connection with the first venturi assembly and the second venturi assembly;
a first transfer assembly comprising: a rotatable first inlet valve; a rotatable first outlet valve; and an actuator for the first inlet valve and the first outlet valve, the first inlet valve and the first outlet valve in flowable connection with a transfer port located towards a bottom portion of the first pressure vessel via a branched conduit;
a second transfer assembly comprising: a rotatable second inlet valve; a rotatable second outlet valve; and an actuator for the second inlet valve and the second outlet valve, the second inlet valve and the second outlet valve in flowable connection with a transfer port located towards a bottom portion of the second pressure vessel via a branched conduit;
a branched main pumping inlet conduit in flowable connection with the first inlet valve of the first transfer assembly and the second inlet valve of the second transfer assembly;
a branched main pumping outlet conduit in flowable connection with the first outlet valve of the first transfer assembly and the second outlet valve of the second transfer assembly;
a pressurised gas manifold comprising:
   a main pressurised gas conduit;
   a depressurisation pneumatic assembly conduit in flowable connection with the main pressurised gas conduit; a rotatable depressurisation pneumatic assembly conduit valve; and an actuator for the depressurisation pneumatic assembly conduit valve;
   a pressurisation pneumatic assembly conduit in flowable connection with the main pressurised gas conduit; a rotatable pressurisation pneumatic assembly conduit valve comprising an orifice plate; and an actuator for the pressurisation pneumatic assembly valve; and
   a controller conduit in flowable connection with the main pressurised gas conduit; and a controller conduit check valve; and
a pneumatic controller, wherein the pneumatic controller is connected to:
   the actuator for the first venturi valve of the first venturi assembly;
   the actuator for the second venturi valve of the second venturi assembly;
   the actuator for the first inlet valve and the first outlet valve of the first transfer assembly;
   the actuator for the second inlet valve and the second outlet valve of the second transfer assembly;
   the actuator for the depressurisation pneumatic assembly conduit valve; and
   the actuator for the pressurisation pneumatic assembly conduit valve, wherein the pneumatic controller is adapted to cycle the pneumatic pump between:
a first cycle wherein:
   the first venturi valve of the first venturi assembly is open,
   the second venturi valve of the second venturi assembly is closed,
   the first inlet valve of the first transfer assembly is open,
   the first outlet valve of the first transfer assembly is closed,
   the second inlet valve of the second transfer assembly is closed,
   the second outlet valve of the second transfer assembly is open,
   the depressurisation pneumatic assembly conduit valve is configured to direct pressurised gas to the first venturi assembly, and
   the pressurisation pneumatic assembly conduit is configured to direct pressurised gas to the second venturi assembly, and
a second cycle wherein:
   the first venturi valve of the first venturi assembly is closed,
   the second venturi valve of the second venturi assembly is open,
   the first inlet valve of the first transfer assembly is closed,
   the first outlet valve of the first transfer assembly is open,
   the second inlet valve of the second transfer assembly is open,
   the second outlet valve of the second transfer assembly is closed,
   the depressurisation pneumatic assembly conduit valve is configured to direct pressurised gas to the second venturi assembly, and
   the pressurisation pneumatic assembly conduit is configured to direct pressurised gas to the first venturi assembly, and wherein
during the first cycle, the pneumatic pump is configured to urge pumpable material towards the first pressure vessel through the main inlet conduit via the first inlet valve of the first transfer assembly, and to urge pumpable material away from the second pressure vessel through the main outlet conduit via the second outlet valve of the second transfer assembly, and
during the second cycle, the pneumatic pump is configured to urge pumpable material away from the first pressure vessel through the main outlet conduit via the first outlet valve of the first transfer assembly, and to urge pumpable material towards the second pressure vessel through the main inlet conduit via the second inlet valve of the second transfer assembly.

In an embodiment, the pneumatic pump or pumping system of the first aspect is of unitary or substantially unitary construction. In embodiments wherein the pneumatic pump or pumping system is of unitary or substantially unitary construction, suitably, the first pressure vessel, the second pressure vessel, and the controller are in fixed or substantially fixed connection as a single unit.

In an embodiment, the pneumatic pump or pumping system of the first aspect is of modular construction. In embodiments wherein the pneumatic pump or pumping system is of modular construction, suitably, the pneumatic pump or pumping system comprises a first pneumatic pump comprising the first pressure vessel; and a second pneumatic pump comprising a second pressure vessel, wherein the first and second pneumatic pumps are connected via the controller.

In a second aspect, the present invention provides a method of pumping pumpable material including a first pumping cycle, wherein the first pumping cycle includes steps of:
depressurising a first pressure vessel with a first pneumatic assembly in flowable connection with the first pressure vessel, and
pressurising a second pressure vessel with a second pneumatic assembly in flowable connection with the second pressure vessel, wherein
the pumpable material is urged towards the first pressure vessel and away from the second pressure vessel during the first pumping cycle.

According to embodiments of the method of the second aspect:
the step of depressurising the first pressure vessel includes directing flow of pressurised gas into the first pneumatic assembly, and
the step of pressurising the second pressure vessel includes directing flow of pressurised gas into the second pneumatic assembly.

In embodiments, during the first pumping cycle, a first volume or rate of flow of pressurised gas directed into the first pneumatic assembly to depressurise the first pressure vessel is greater than a second volume or rate of flow of pressurised gas directed into the second pneumatic assembly to pressurise the second pressure vessel.

In embodiments, the first volume or rate of flow is between about 5% and about 50%, or between about 10% and about 25%, greater than the second volume or rate of flow.

The method of the second aspect may include a second pumping cycle, wherein the second pumping cycle includes steps of:
pressurising the first pressure vessel with the first pneumatic assembly, and
depressurising the second pressure vessel with the second pneumatic assembly, wherein
the pumpable material is urged away from the first pressure vessel and towards the second pressure vessel during the second pumping cycle.

According to embodiments of the method of the second aspect:
the step of pressurising the first pressure vessel includes directing flow of pressurised gas into the first pneumatic assembly, and
the step of depressurising the second pressure vessel includes directing flow of pressurised gas into the second pneumatic assembly.

In embodiments, during the second pumping cycle, a first rate of flow of pressurised gas directed into the first pneumatic assembly to pressurise the first pressure vessel is less than a second rate of flow of pressurised gas directed into the second pneumatic assembly to depressurise the second pressure vessel.

In embodiments, the first rate of flow is between about 5% and about 50%, or between about 10% and about 25%, less than the second rate of flow.

In embodiments, the method of the second aspect includes a step of controlling the pumping with a controller. Suitably, the controller is a pneumatic controller. In embodiments, the method includes a step of directing flow of pressurised gas into the pneumatic controller.

Suitably, the step of controlling the pumping according to the method of the second aspect includes controlling conditions or parameters of the first pumping cycle and/or the second pumping cycle. In embodiments, the step of controlling the pumping includes controlling a rate of cycling between the first pumping cycle and the second pumping cycle.

In embodiments, the method of the second aspect includes a step of directing pressurised gas into a pressurised gas manifold in flowable connection with the first pneumatic assembly and/or the second pneumatic assembly, prior to the first pumping cycle and/or the second pumping cycle.

**In** embodiments, the pressurised gas manifold is in flowable connection with the pneumatic controller, and the method includes a step of directing flow of pressurised gas into the pneumatic controller prior to the first pumping cycle and/or the second pumping cycle.

**In** embodiments of the method of the second aspect, a first volume or rate of flow of pressurised gas that is directed into the pressurised gas manifold is greater than a second volume or rate of flow of gas that is required to:
depressurise the first pressure vessel and pressurise the second pressure vessel, during the first pumping cycle,
pressurise the first pressure vessel and depressurise the second pressure vessel, during the second pumping cycle, and/or
control the pumping with the pneumatic controller.

In embodiments, the first volume or rate of flow is between about 5% and about 50%, or between about 10% and about 25%, greater than the second volume or rate of flow.

In embodiments, a first pressure of pressurised gas within the gas manifold during the first and/or second pumping cycle is greater than a second pressure of pressurised gas within the pneumatic controller.

In embodiments, the first pressure is between about 5% and about 50%, or between about 10% and about 25%, greater than the second pressure.

In embodiments, the pumpable material that is pumped according to the method of the second aspect is heterogenous. In embodiments, the pumpable material comprises between about 1% and about 20%, or between about 5% and about 15%, solids.

In embodiments, the pumpable material is selected from: mining material, such as drilling flowable; petrochemical material, such as petrochemical sludge; and wastewater material, such as primary or secondary wastewater sludge.

In embodiments of the method of the second aspect, the pumpable material is pumped at a rate of at least about 10,000 litres per hour (l/h), about 30,000 l/h, or about 50,000 l/h.

In embodiments, the method of the second aspect is performed using the pneumatic pump of the first aspect.

In a third aspect, the invention provides a method of manufacturing or forming a pneumatic pump or pumping system, including a step of combining: a first pressure vessel, a second pressure vessel, a first pneumatic assembly comprising a first pneumatic assembly valve, a second pneumatic assembly comprising a second pneumatic assembly valve, a first transfer assembly comprising one or more first transfer assembly valves, a second transfer assembly comprising one or more second transfer assembly valves, and a controller.

In embodiments, the method of the third aspect includes steps of flowably connecting the first pneumatic assembly with the first pressure vessel, and flowably connecting the second pneumatic assembly with the second pressure vessel.

In embodiments, the method of the third aspect includes a step of connecting the controller with the first pneumatic assembly valve, the second pneumatic assembly valve, the one or more first transfer assembly valves, and the one or more second transfer assembly valves.

In embodiments, the method of the third aspect includes a step of connecting the controller with a first pneumatic pump comprising the first pneumatic assembly valve and the one or more first transfer assembly valves; and connecting the controller with a second pneumatic pump comprising the second pneumatic assembly valve and the one or more second transfer assembly valves.

A fourth aspect of the invention provides a pneumatic pump or pneumatic pumping system manufactured or formed according to the method of the third aspect. In embodiments, the pneumatic pump or system of the fourth aspect is the pneumatic pump or system of the first aspect.

A fifth aspect of the invention provides a controller for use for the pump or system of the first aspect or the method of the second or third aspect.

A sixth aspect of the invention provides a controller when used for the pump or system of the first aspect or the method of the second or third aspect.

Suitably, the controller of the fifth or sixth aspect is a pneumatic controller.

In embodiments, the controller of the fifth or sixth aspect comprises one or more solenoid valves and/or one or more pneumatic timers.

In embodiments, the controller comprises one or more of a pressure regulator; a pressure gauge; and a pneumatic filter.

In embodiments, the controller of the fifth or sixth aspect is connectable to each of:
a first pneumatic valve actuator of a first pneumatic assembly; and
a second pneumatic valve actuator of a second pneumatic assembly.

In embodiments, the controller of the fifth or sixth aspect is connectable to each of:
a first transfer assembly actuator of a first transfer assembly; and
a second transfer assembly actuator of a second transfer assembly.

A seventh aspect of the invention provides a controller for use for a pneumatic pump or pumping system, the pump or system comprising:
a first pressure vessel; and a second pressure vessel;
a first pneumatic assembly in flowable connection with the first pressure vessel, the first pneumatic assembly comprising a first pneumatic assembly valve;
a second pneumatic assembly in flowable connection with the second pressure vessel, the second pneumatic assembly comprising a second pneumatic assembly valve;
a first transfer assembly in flowable connection with the first pressure vessel, the first transfer assembly comprising one or more first transfer assembly valves;
a second transfer assembly in flowable connection with the second pressure vessel, the second transfer assembly comprising one or more second transfer assembly valves,
wherein the controller is adapted to control the first pneumatic assembly valve, the second pneumatic assembly valve, the one or more first transfer assembly valves, and the one or more second transfer assembly valves.

An eighth aspect of the invention provides a controller for use for a method of pumping pumpable material, the method including a first pumping cycle, wherein the first pumping cycle includes steps of:
depressurising a first pressure vessel with a first pneumatic assembly in flowable connection with the first pressure vessel, and
pressurising a second pressure vessel with a second pneumatic assembly in flowable connection with the second pressure vessel, wherein
the pumpable material is urged towards the first pressure vessel and away from the second pressure vessel during the first pumping cycle,
optionally wherein the method includes a second pumping cycle, wherein the second pumping cycle includes steps of:
   pressurising the first pressure vessel with the first pneumatic assembly, and
   depressurising the second pressure vessel with the second pneumatic assembly, wherein
   the pumpable material is urged away from the first pressure vessel and towards the second pressure vessel during the second pumping cycle.

Suitably, the controller of the seventh or eighth aspect is a pneumatic controller.

In embodiments, the controller of the seventh or eighth aspect comprises one or more solenoid valves and/or one or more pneumatic timers.

In embodiments, the controller comprises one or more of a pressure regulator; a pressure gauge; and a pneumatic filter.

In embodiments, the controller of the seventh or eighth aspect is connectable to each of:
a first pneumatic valve actuator of or for the first pneumatic assembly;
a second pneumatic valve actuator of or for the second pneumatic assembly;
a first transfer assembly actuator of or for the first transfer assembly; and
a second transfer assembly actuator of or for the second transfer assembly.

In embodiments, the controller of the fifth to eighth aspect comprises, or is connectable with, a pressurised gas manifold. Suitably, the pressurised gas manifold is as hereinabove described for the pump or pumping system of the first aspect.

In embodiments the pressurised gas manifold comprises a depressurisation pneumatic assembly conduit and a pressurisation pneumatic conduit, wherein the pressurised gas manifold is adapted to deliver:
a relatively higher rate or volume of gas flow through the depressurisation pneumatic assembly conduit to the first or second pneumatic assembly, and
a relatively lower rate or volume of gas flow through the pressurisation pneumatic assembly conduit to the first or second pneumatic assembly.

In embodiments, the pressurisation pneumatic assembly of the pressurised gas manifold comprises a conduit valve adapted to restrict passage of gas through the pressurisation pneumatic assembly conduit valve relative to passage of gas through the depressurisation pneumatic assembly conduit valve.

In embodiments, the pressurisation pneumatic assembly conduit valve comprises an orifice plate to restrict passage of gas through the pressurisation pneumatic assembly conduit valve.

In embodiments, the pressurised gas manifold comprises a controller conduit in flowable connection with the main pressurised gas conduit and the controller.

In embodiments, the pressurised gas manifold comprises a controller conduit valve, wherein the controller conduit is in flowable connection with the main pressurised gas conduit via the controller conduit valve. In embodiments, the controller conduit valve is a check valve.

A ninth aspect of the invention provides a method of manufacturing or forming a pneumatic pump or pneumatic pumping system, including a step of connecting the controller of the fifth, seventh, or eighth aspect to at least one pneumatic pump.

In embodiments, the method of the ninth aspect includes steps of connecting the controller to a first pneumatic pump and a second pneumatic pump.

A tenth aspect of the invention provides a pneumatic pump or pumping system manufactured or formed according to the method of the ninth aspect. In embodiments, the pump or system of the tenth aspect is the pump or system of the first aspect.

### BRIEF DESCRIPTION OF THE DRAWINGS

The invention will be described hereinafter with reference to typical embodiments illustrated in the drawings and wherein:
Figure 1 sets forth a perspective view of an embodiment of a pneumatic pump according to an aspect of the invention, pneumatic pump 10.
Figure 2 sets forth a side view of the pneumatic pump of Figure 1.
Figure 3 sets forth a rear view of the pneumatic pump of Figure 1.
Figure 4 sets forth a partially disassembled front view of the pneumatic pump of Figure 1.
Figure 5 sets a rear view of pneumatic pump 10, showing a pressurised gas supply valve connected with a pneumatic actuator.
Figure 6 sets forth an internal view of a controller of pneumatic pump 10.

### DETAILED DESCRIPTION

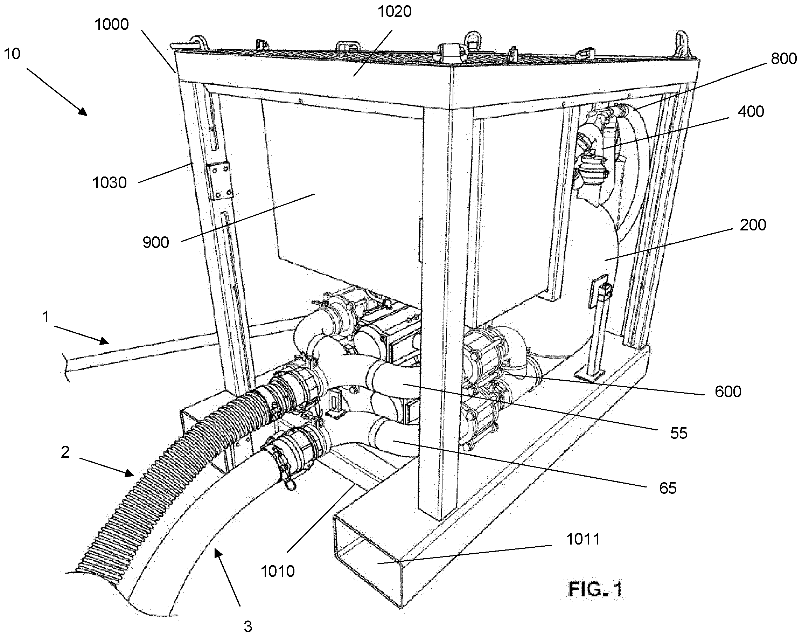

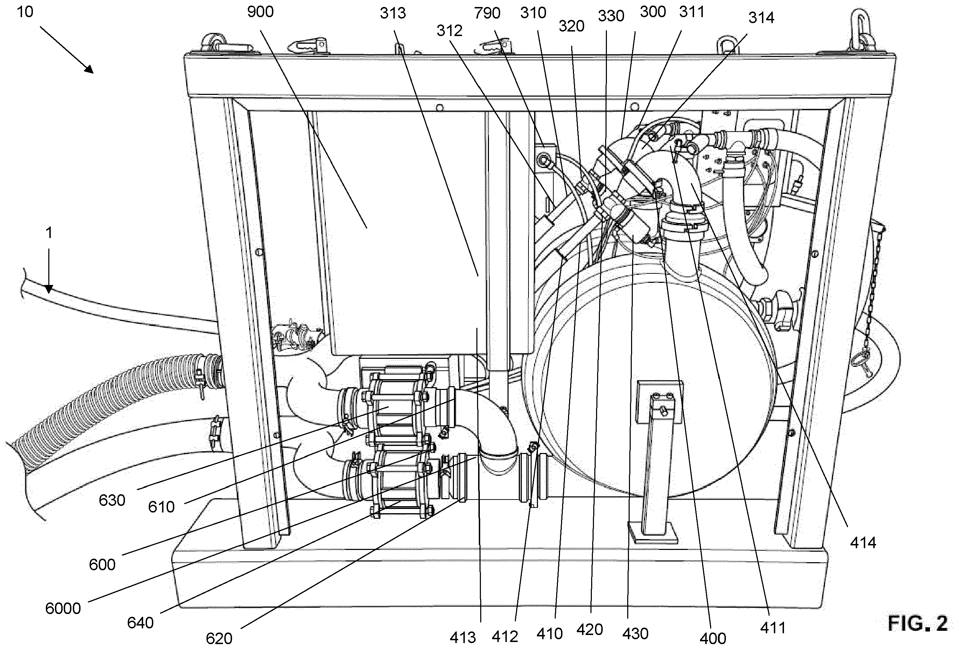

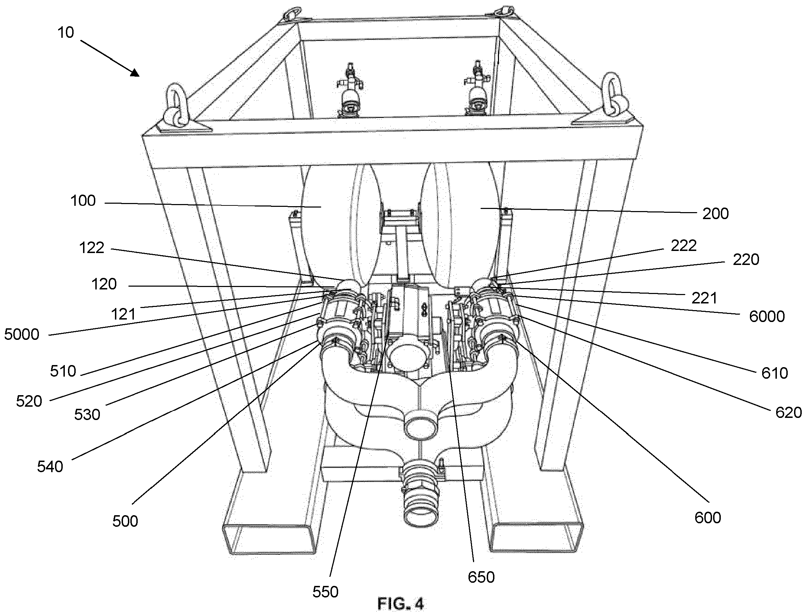

Figures 1-6 show an embodiment of a pneumatic pump according to an aspect of the invention, pneumatic pump 10. Pneumatic pump 10 comprises first pressure vessel 100; second pressure vessel 200; first pneumatic assembly 300; second pneumatic assembly 400; first transfer assembly 500; second transfer assembly 600; controller 700; pressurised gas manifold 800; exhaust component 900; and frame 1000.

First pressure vessel 100 and second pressure vessel 200 of pneumatic pump 10 are of spherically-derived shape, formed as substantially hollow disc-like structures.

First pressure vessel 100 comprises first pressure port 110, located at a top portion of first pressure vessel 100; and first transfer port 120, located at a bottom portion of first pressure vessel 100. First pressure port 110 comprises first pressure port neck 111; and first pressure port orifice 112. First transfer port 120 comprises first transfer port neck 121; and first transfer port orifice 122.

Second pressure vessel 200 comprises second pressure port 210, located at a top portion of second pressure vessel 200; and second transfer port 220 located at a bottom portion of second pressure vessel 200. Second pressure port 210 comprises second pressure port neck 211; and second pressure port orifice 212. Second transfer port 220 comprises second transfer port neck 221; and second transfer port orifice 222.

First pneumatic assembly 300 and second pneumatic assembly 400 of pneumatic pump 10 are venturi assemblies.

First pneumatic assembly 300 comprises first pneumatic assembly body 310; first pneumatic assembly valve 320; and first pneumatic assembly valve actuator 330.

First pneumatic assembly body 310 of first pneumatic assembly 300 comprises first pneumatic assembly inlet 311; first pneumatic assembly stem 312; first pneumatic assembly outlet 313; and first pneumatic assembly neck 314. First pneumatic assembly neck 314 is flowably connected to first pressure port 110 of first pressure vessel 100.

First pneumatic assembly valve 320 is a two-way ball valve. First pneumatic assembly valve actuator 330 is a pneumatic actuator connected with first pneumatic assembly valve 320.

Second pneumatic assembly 400 comprises second pneumatic assembly body 410; second pneumatic assembly valve 420; and second pneumatic assembly valve actuator 430.

Second pneumatic assembly body 410 of second pneumatic assembly 400 comprises second pneumatic assembly inlet 411; second pneumatic assembly stem 412; second pneumatic assembly outlet 413; and second pneumatic assembly neck 414. Second pneumatic assembly neck 414 is flowably connected to second pressure port 210 of second pressure vessel 200.

Second pneumatic assembly valve 420 is a two-way ball valve. Second pneumatic assembly valve actuator 430 is a pneumatic actuator connected with second pneumatic assembly valve 420.

First transfer assembly 500 of pneumatic pump 10 comprises first transfer assembly inlet 510; first transfer assembly outlet 520; first transfer assembly inlet valve 530; first transfer assembly outlet valve 540; and first transfer assembly valve actuator 550.

First transfer assembly inlet 510 and first transfer assembly outlet 520 of first transfer assembly 500 are of first branched transfer conduit 5000 flowably connected with first transfer port 120 of first pressure vessel 100. First transfer assembly inlet 510 is oriented substantially above first transfer assembly outlet 520 within first branched transfer conduit 5000.

First transfer assembly inlet valve 530 and first transfer assembly outlet valve 530 are two-way ball two valves. First transfer assembly inlet valve 530 is flowably connected with first transfer port 120 of first pressure vessel 100 via first transfer assembly inlet 510. First transfer assembly outlet valve 540 is flowably connected with first transfer port 120 of first pressure vessel 100 via first transfer assembly outlet 520.

First transfer assembly valve actuator 550 is a pneumatic actuator, connected with both first transfer assembly inlet valve 530 and first transfer assembly outlet valve 540. First transfer assembly valve actuator 550 and its connection with first transfer assembly inlet valve 530 and first transfer assembly outlet valve 540 is similar as described in Australian patent application 2019202349, incorporated herein by reference and further discussed hereinbelow.

Second transfer assembly 600 of pneumatic pump 10 comprises second transfer assembly inlet 610; second transfer assembly outlet 620; second transfer assembly inlet valve 630; second transfer assembly outlet valve 640; and second transfer assembly valve actuator 650.

Second transfer assembly inlet 610 and second transfer assembly outlet 620 are of second branched transfer conduit 6000 flowably connected with second transfer port 220. Second transfer assembly inlet 610 is oriented substantially above second transfer assembly outlet 620 within second branched transfer conduit 6000.

Second transfer assembly inlet valve 630 and second transfer assembly outlet valve 640 are two-way ball two valves. Second transfer assembly inlet valve 630 is flowably connected with second transfer port 220 of second pressure vessel 200 via second transfer assembly inlet 610. Second transfer assembly outlet valve 640 is flowably connected with second transfer port 220 of second pressure vessel 200 via second transfer assembly outlet 620.

Second transfer assembly valve actuator 650 is a pneumatic actuator, connected with both second transfer assembly inlet valve 630 and second transfer assembly outlet valve 640. Second transfer assembly valve actuator 650 and its connection with second transfer assembly inlet valve 630 and second transfer assembly outlet valve 640 is similar as described in Australian patent application 2019202349, incorporated herein by reference and further discussed hereinbelow.

**In** flowable connection with first transfer assembly inlet 510 of first transfer assembly 500 and second transfer assembly inlet 610 of second transfer assembly 600 is main pumping inlet conduit 55 of pneumatic pump 10. Main pumping inlet conduit 55 is a branched conduit connectable with a pipe or hose such as inlet hose 2.

**In** flowable connection with first transfer assembly outlet 520 and second transfer assembly outlet 620 is main pumping outlet conduit 65 of pneumatic pump 10. Main pumping outlet conduit 65 is a branched conduit connectable with a pipe or hose such as outlet pipe 3.

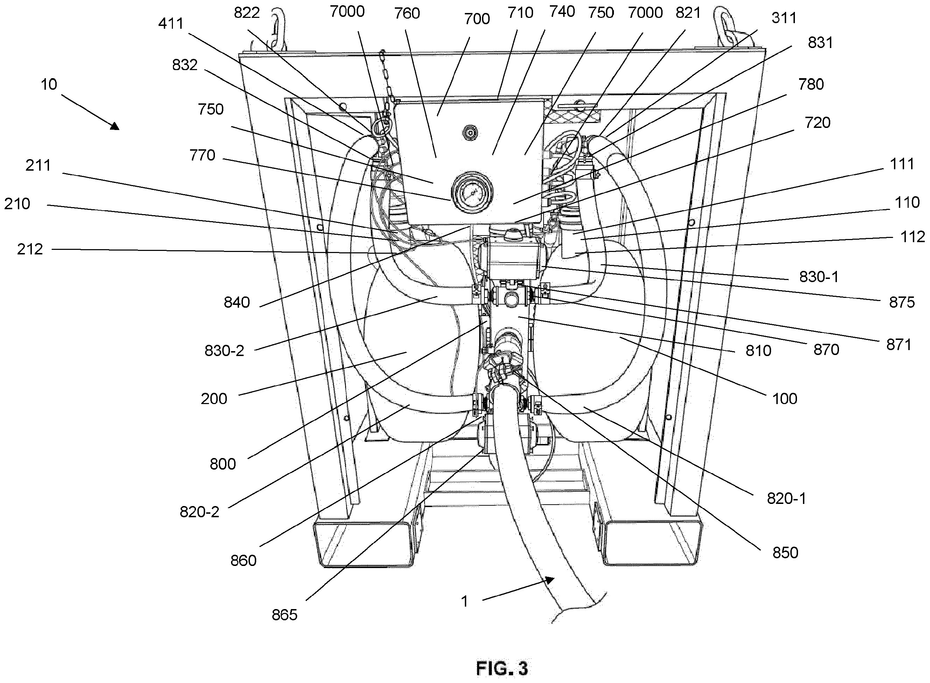

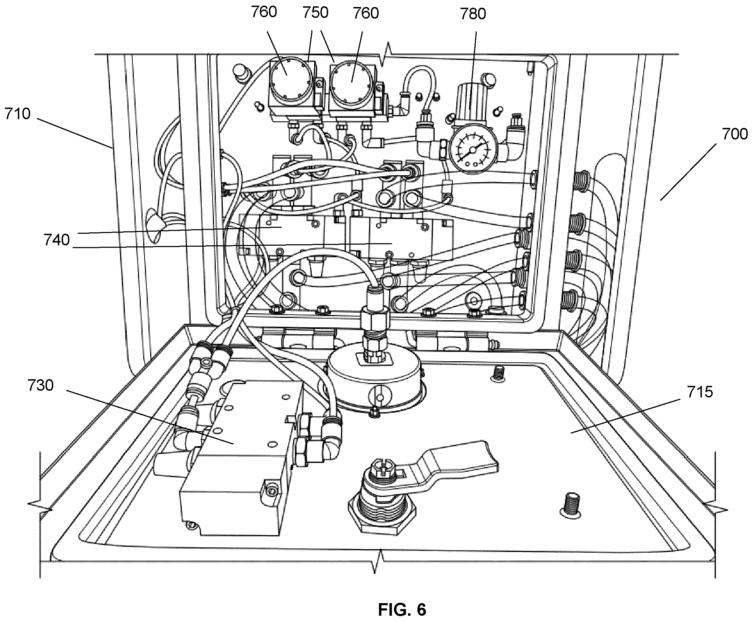

Controller 700 of pneumatic pump 10 is a pneumatic controller. As best seen in Figure 3 and Figure 6, controller 700 comprises controller casing 710; openable, and optionally lockable, controller door 715; controller inlet 720; master switch 730; solenoid valves 740; pneumatic timers 750; timer actuators 760; pressure gauge 770; and pressure regulator 780.

Controller 700 is connected to respective actuators of pneumatic pump 10 by respective controller connectors 7000. Controller connectors may be pneumatic cables or pneumatic hoses, as appropriate or desirable.

Pressurised gas manifold 800 of pneumatic pump 10 comprises pressurised gas supply conduit 805; main pressurised gas conduit 810; depressurisation pneumatic assembly conduit 820; pressurisation pneumatic assembly conduit 830; first controller conduit 8050; and second controller conduit 840.

Pressurised gas manifold 800 further comprises first pressurised gas supply valve 8051; second pressurised gas supply valve 8052; depressurisation pneumatic assembly conduit valve 860; pressurisation pneumatic assembly conduit valve 870; and second controller conduit valve 880.

Pressurised gas manifold 800 further comprises first pressurised gas supply valve actuator 8053; second pressurised gas supply valve actuator 8054; depressurisation pneumatic assembly conduit valve actuator 865; and pressurisation pneumatic assembly conduit valve actuator 875.

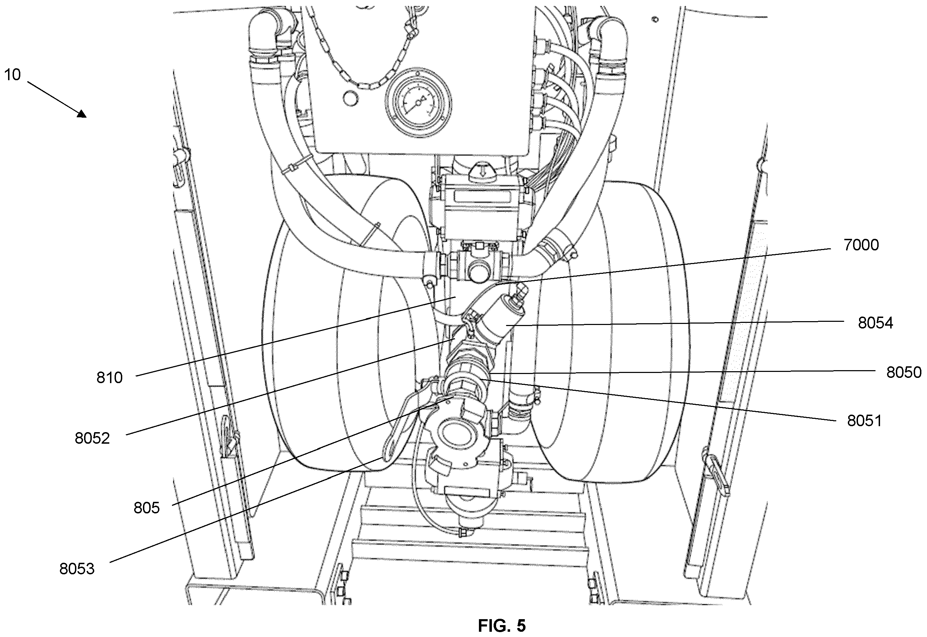

Pressurised gas supply conduit 805 of pressurised gas manifold 800 is adapted to receive a source of pressurised gas, such as pressurised air tubing 1, shown in Figure 3. A typical arrangement of pressurised gas supply conduit 805, disconnected from air tubing 1, is shown in detail in Figure 5.

As seen in Figure 5, pressurised gas supply conduit 805 is flowably connected with main pressurised gas conduit 810 via first pressurised gas supply valve 8051 and second pressurised gas supply valve 8052.

First pressurised gas supply valve 8051 is a two-way ball valve, connected with first pressurised gas supply valve actuator 8053. First pressurised gas supply valve actuator 8053 is a manual actuator.

Second pressurised gas supply valve 8052 is a two-way ball valve, connected with second pressurised gas supply valve actuator 8054. Second pressurised gas valve actuator 8054 is a pneumatic actuator. A controller connector 7000 connects second pressurised gas valve actuator 8054 with controller 700.

Pressurised gas supply conduit 805 is flowably connected with controller 700 via first controller conduit 8050. First controller conduit 8050 extends from pressurised gas supply conduit 805 at a position between first pressurised gas supply valve 8051 and second pressurised gas supply valve 8052.

Main pressurised gas conduit 810 of pressurised gas manifold 800 is flowably connected with depressurisation pneumatic assembly conduit 820; pressurisation pneumatic assembly conduit 830; and second controller conduit 840.

Depressurisation pneumatic assembly conduit 820 is flowably connected with main pressurised gas conduit 810 via depressurisation pneumatic assembly conduit valve 860. A first end 821 of depressurisation pneumatic assembly conduit 820 is flowably connected with inlet 311 of first pneumatic assembly 300. A second end 822 of depressurisation pneumatic assembly conduit 820 is flowably connected with inlet 411 of second pneumatic assembly 400.

Depressurisation pneumatic assembly conduit valve 860 is a three-way ball valve, positioned between first section 820-1 and second section 820-2 of depressurisation pneumatic assembly conduit 820.

Depressurisation pneumatic assembly conduit valve actuator 865 is a pneumatic actuator connected to depressurisation pneumatic assembly conduit valve 860. A controller connector 7000 connects depressurisation pneumatic assembly conduit valve actuator 865 with controller 700.

Pressurisation pneumatic assembly conduit 830 is flowably connected with main pressurised gas conduit 810 via pressurisation pneumatic assembly conduit valve 870. A first end 831 of pressurisation pneumatic assembly conduit 830 is flowably connected with inlet 311 of first pneumatic assembly 300. A second end 832 of pressurisation pneumatic assembly conduit 830 is flowably connected with inlet 411 of second pneumatic assembly 400.

Pressurisation pneumatic assembly conduit valve 870 is a three-way ball valve comprising orifice plate 871, positioned between first section 830-1 and second section 830-2 of pressurisation pneumatic assembly conduit 830.

Pressurisation pneumatic assembly conduit valve actuator 875 is a pneumatic actuator connected with pressurisation pneumatic assembly conduit valve 870. A controller connector 7000 connects pressurisation pneumatic assembly conduit valve actuator with controller 700.

Second controller conduit 840 flowably connects main pressurised gas conduit 810 and controller 700 via controller conduit valve 880. Controller conduit valve 880 is a check valve.

Exhaust component 900 of pneumatic pump 10 is an exhaust box. Exhaust component 900 is flowably connected with first pneumatic assembly outlet 313 of first pneumatic assembly body 310; and second pneumatic assembly outlet 413 of second pneumatic assembly body 410.

Mounted to exhaust box 900, and flowably connected with controller 700, is pneumatic filter 790. It will be appreciated that pneumatic filter 790 may be considered a part of controller 700 or a separate component of pneumatic pump 10.

Frame 1000 of pneumatic pump 10 comprises frame base 1010; frame roof 1020; and frame posts 1030. Frame 1000 is adapted to accommodate and support other components of pneumatic pump 10. Frame base 1010 comprises base channels 1011, adapted to accommodate forklift tynes.

Typical use of pneumatic pump 10 will now be described.

To prepare pneumatic pump 10 for use, a source of pressurised air, such as pressurised air tubing 1, is connected to pressurised gas supply conduit 805 of pressurised gas supply manifold 800 of pneumatic pump 10.

With first pressurised gas supply valve 8051 and second pressurised gas supply valve 8052 in respective closed configurations, pressurised air is directed through pressurised gas tubing 1. It will be understood that, typically, the flow of pressurised air that is directed through pressurised gas tubing 1 is greater than is required for operation of pneumatic pump 10, including control of pneumatic pump 10 with pneumatic controller 700, and pressurisation and depressurisation of first and second pressure vessels 100, 200, as hereinbelow described in further detail.

A pipe or hose, such as inlet hose 2, is connected with main inlet conduit 55, and an end of the pipe or hose away from main inlet conduit 55 is positioned in material to be pumped (not shown). Another pipe or hose, such as outlet pipe 3, is connected with main outlet conduit 65, and an end of the pipe or hose away from main outlet conduit 55 is positioned in an area to store or dispose of pumped material (not shown).

Prior to commencing pumping with pneumatic pump 10, manual actuator 8053 is actuated to configure first pressurised gas supply valve 8051 to an open configuration, while second pressurised gas supply valve 8052 remains in the closed configuration.

When first pressurised gas supply valve 8051 is in the open configuration and second pressurised gas supply valve 8052 is in the closed configuration, pressurised air travels from pressurised gas tubing 1 into pressurised gas supply conduit 805, and to master switch 730 of controller 700 via first controller conduit 8050. However, pneumatic timers 750 of controller 700 remain isolated from the pressurised air.

To begin pumping, master switch 730 of controller 700 is configured to an on configuration. With master switch 730 in the on configuration, under the control of controller 700 via a controller connector 7000, pneumatic actuator 8054 configures second pressurised gas supply valve 8052 to an open configuration.

When second pressurised gas supply valve 8052 is in the open position, pressurised air travels into main pressurised gas conduit 810 and to pneumatic timers 750 of controller 700 via second controller conduit 840.

With pneumatic timers 750 of controller 700 energised by pressurised air, pneumatic pump 10 begins cycling between a first pumping cycle and a second pumping cycle. Additionally, an operator can adjust cycling parameters, including the duration of each of the first and second cycles, using timer actuators 760 of controller 700.

During the first pumping cycle, under the control of controller 700 via a controller connector 7000, depressurisation pneumatic assembly conduit valve actuator 865 configures depressurisation pneumatic assembly conduit valve 860 into a first configuration.

When depressurisation pneumatic assembly conduit valve 860 is in the first configuration, pressurised air from main pressurised gas conduit 810 passes through depressurisation pneumatic assembly conduit valve 860 into section 820-1 of depressurisation pneumatic assembly conduit 820, and towards first end 821 of depressurisation pneumatic assembly conduit 820 that is flowably connected with first pneumatic assembly 300.

Furthermore, when depressurisation pneumatic assembly conduit valve 860 is in the first configuration, pressurised air from main pressurised gas conduit 810 is prevented or substantially constrained from passing through depressurisation pneumatic assembly conduit valve 860 into section 820-2 of depressurisation pneumatic assembly conduit 820 towards second end 822 of depressurisation pneumatic assembly conduit 820 that is flowably connected with second pneumatic assembly 400.

Also during the first pumping cycle, under the control of controller 700 via a controller connector 7000, pressurisation pneumatic assembly conduit valve actuator 875 configures depressurisation pneumatic assembly conduit valve 870 into a second configuration.

When pressurisation pneumatic assembly conduit valve 870 is in the second configuration, pressurised air from main pressurised gas conduit 810 passes through pressurisation pneumatic assembly conduit valve 870 into section 830-2 of pressurisation pneumatic assembly conduit 830, and towards second end 832 of depressurisation pneumatic assembly conduit 830 that is flowably connected with second pneumatic assembly 400.

Furthermore, when pressurisation pneumatic assembly conduit valve 870 is in the second configuration, pressurised air from main pressurised gas conduit 810 is prevented or substantially constrained from passing through pressurisation pneumatic assembly conduit valve 870 into section 830-1 of pressurisation pneumatic assembly conduit 830 towards first end 831 of depressurisation pneumatic assembly conduit that is flowably connected with first pneumatic assembly 300.

Also during the first pumping cycle, under the control of controller 700 via a controller connector 7000, first pneumatic assembly valve actuator 320 configures first pneumatic assembly valve 310 into an open configuration.

When pneumatic assembly valve 310 is in the open configuration, pressurised air from first end 821 of depressurisation pneumatic assembly conduit 820 in flowable connection with first pneumatic assembly 300 passes through open first pneumatic assembly valve 310. Passage of pressurised air from depressurisation pneumatic assembly conduit 820 through open first pneumatic assembly valve 310 of first pneumatic assembly 300 depressurises first pressure vessel 100 by creating suction through first pressure port 110.

Also during the first pumping cycle, under the control of controller 700 via a controller connector 7000, second pneumatic assembly valve actuator 420 configures second pneumatic assembly valve 410 into a closed configuration.

When pneumatic assembly valve 410 is in the closed configuration, pressurised air from second end 832 of pressurisation pneumatic conduit 830 in flowable connection with second pneumatic assembly 400 is prevented or substantially constrained from passing through closed second pneumatic assembly valve 410. Pressurised air from pressurisation pneumatic conduit 830 that is prevented or substantially constrained from passing through closed second pneumatic assembly valve 410 pressurises second pressure vessel 200 by flowing into second pressure port 210.

Also during the first pumping cycle, under the control of controller 700 via a controller connector 7000, first transfer assembly valve actuator 550 configures first transfer assembly inlet valve 530 into an open configuration and first transfer assembly outlet valve 540 into a closed configuration.

When first transfer assembly inlet valve 530 is in the open configuration and first transfer assembly outlet valve 540 is in the closed configuration, depressurisation of first pressure vessel 100 urges pumpable material through inlet hose 2, main inlet conduit 55, and first transfer assembly inlet 510, and first transfer port 120.

Also during the first pumping cycle, under the control of controller 700 via a controller connector 7000, second transfer assembly valve actuator 650 configures second transfer assembly inlet valve 630 into a closed configuration and second transfer assembly outlet valve 640 into an open configuration.

When second transfer assembly inlet valve 630 is in the closed configuration and second transfer assembly outlet valve 640 is in the open configuration, pressurisation of second pressure vessel 200 urges pumpable material through second transfer port 220, second transfer assembly outlet 620, main outlet conduit 65, and outlet hose 3.

During the second pumping cycle, under the control of controller 700 via a controller connector 7000, depressurisation pneumatic assembly conduit valve actuator 865 configures depressurisation pneumatic assembly conduit valve 860 into a second configuration.

When depressurisation pneumatic assembly conduit valve 860 is in the second configuration, pressurised air from main pressurised gas conduit 810 passes through depressurisation pneumatic assembly conduit valve 860 into section 820-2 of depressurisation pneumatic assembly conduit 820, and towards second end 822 of depressurisation pneumatic assembly conduit 820 that is flowably connected with second pneumatic assembly 400.

Furthermore, when depressurisation pneumatic assembly conduit valve 860 is in the second configuration, pressurised air from main pressurised gas conduit 810 is prevented or substantially constrained from passing through depressurisation pneumatic assembly conduit valve 860 into section 820-1 of depressurisation pneumatic assembly conduit 820 towards first end 821 of depressurisation pneumatic assembly conduit 820 that is flowably connected with first pneumatic assembly 300.

Also during the second pumping cycle, under the control of controller 700 via a controller connector 7000, pressurisation pneumatic assembly conduit valve actuator 875 configures depressurisation pneumatic assembly conduit valve 870 into a first configuration.

When pressurisation pneumatic assembly conduit valve 870 is in the first configuration, pressurised air from main pressurised gas conduit 810 passes through pressurisation pneumatic assembly conduit valve 870 into section 830-1 of pressurisation pneumatic assembly conduit 830, and towards first end 831 of depressurisation pneumatic assembly conduit 830 that is flowably connected with first pneumatic assembly 300.

Furthermore, when pressurisation pneumatic assembly conduit valve 870 is in the first configuration, pressurised air from main pressurised gas conduit 810 is prevented or substantially constrained from passing through pressurisation pneumatic assembly conduit valve 870 into section 830-2 of pressurisation pneumatic assembly conduit 830 towards second end 832 of depressurisation pneumatic assembly conduit that is flowably connected with second pneumatic assembly 400.

Also during the second pumping cycle, under the control of controller 700 via a controller connector 7000, first pneumatic assembly valve actuator 320 configures first pneumatic assembly valve 310 into a closed configuration.

When pneumatic assembly valve 310 is in the closed configuration, pressurised air from first end 831 of pressurisation pneumatic conduit 820 in flowable connection with first pneumatic assembly 300 is prevented or substantially constrained from passing through closed first pneumatic assembly valve 310. Pressurised air from pressurisation pneumatic conduit 830 that is prevented or substantially constrained from passing through closed first pneumatic assembly valve 310 of first pneumatic assembly 300 pressurises first pressure vessel 100 by flowing into first pressure port 110.

Also during the second pumping cycle, under the control of controller 700 via a controller connector 7000, second pneumatic assembly valve actuator 420 configures second pneumatic assembly valve 410 into an open configuration.

When pneumatic assembly valve 410 is in the open configuration, pressurised air from second end 822 of depressurisation pneumatic assembly conduit 820 in flowable connection with second pneumatic assembly 400 passes through open second pneumatic assembly valve 410. Passage of pressurised air from depressurisation pneumatic assembly conduit 820 through open second pneumatic assembly valve 410 of second pneumatic assembly 400 depressurises second pressure vessel 200 by creating suction through first pressure port 210.

Also during the second pumping cycle, under the control of controller 700 via a controller connector 7000, first transfer assembly valve actuator 550 configures first transfer assembly inlet valve 530 into a closed configuration and first transfer assembly outlet valve 540 into an open configuration.

When first transfer assembly inlet valve 530 is in the closed configuration and first transfer assembly outlet valve 540 is in the open configuration, pressurisation of first pressure vessel 100 urges pumpable material through first transfer port 120, first transfer assembly outlet 520, main outlet conduit 65, and outlet hose 3.

Also during the first pumping cycle, under the control of controller 700 via a controller connector 7000, second transfer assembly valve actuator 650 configures second transfer assembly inlet valve 630 into an open configuration and second transfer assembly outlet valve 640 into an closed configuration.

When second transfer assembly inlet valve 630 is in the open configuration and second transfer assembly outlet valve 640 is in the closed configuration, depressurisation of second pressure vessel 200 urges pumpable material through inlet hose 2, main inlet conduit 55, second transfer assembly inlet 610, and second transfer port 220.

It will be appreciated from the above that during both the first and the second pumping cycles, pumpable material is urged towards pneumatic pump 10 from a source of pumpable material such as through inlet hose 2, and pumpable material is urged away from pneumatic pump 10 to a destination for pumpable material such as through outlet pipe 3.

It will be appreciated that, during the first pumping cycle, pumpable material is urged towards pneumatic pump 10 by depressurisation of first pressure vessel 100, and pumpable material is urged away from pneumatic pump 10 by pressurisation of second pressure vessel 200.

It will be appreciated that, during the second pumping cycle, pumpable material is urged towards pneumatic pump 10 by depressurisation of second pressure vessel 200, and pumpable material is urged away from pneumatic pump 10 by pressurisation of first pressure vessel 100.

As hereinabove described, first transfer assembly valve actuator 550 and its connection with first transfer assembly inlet valve 530 and first transfer assembly outlet valve 540; and second transfer assembly valve actuator 650 and its connection with second transfer assembly inlet valve 630 and second transfer assembly outlet valve 640, is similar as described in Australian patent application 2019202349 (AU 2019202349) incorporated herein by reference.

It will be appreciated that each of:
first transfer assembly valve actuator 550, first transfer assembly inlet valve 530, and first assembly outlet valve 540; and
second transfer assembly valve actuator 650, second transfer assembly inlet valve 630, and second transfer assembly outlet valve 640,
form a respective rotatable valve apparatus as described in AU 2019202349.

It will be understood that the specific orientation of valve actuator and valves has been adapted to suit pneumatic pump 10 as described herein. For example, inlet valve 530/630 and outlet valve 540/640 are arranged vertically, and valve actuators 550/650 are positioned laterally from inlet valves 530/630 and outlet valves 540/640.

However, key structural and functional features of the first and second transfer assembly valve actuator and valve arrangement are shared with the typical embodiment described in detail in AU 2019202349 (referred to as rotatable valve apparatus 100 therein). Briefly, a pneumatic rotary actuator, such as actuator model A092 as manufactured by Wuxi Belef Pneumatic Actuators Co Ltd (China), is connected to an inlet valve (530/630) and an outlet valve (540/640), wherein a lever arrangement opens the inlet valve (530/630) and closes the outlet valve (540/640) in response to rotation of the pneumatic actuator in a first direction; and closes the inlet valve (530/630) and opens the outlet valve (540/640) in response to rotation of the pneumatic actuator in a second direction opposite the first direction.

By way of non-limiting example, certain advantages and variations of aspects and embodiments of the invention will now be discussed.

It will be understood that pneumatic pumps such as described herein need not necessarily comprise a supporting frame such as frame 1000. However, the inclusion of a supporting frame wherein the frame supports all other components of pneumatic pump 10 is considered advantageous. For example, frame 1000 can allow for transport of pneumatic pump 10 to a desired location, wherein relatively simple connection of a pressurised gas, such as air, supply along with inlet and outlet hoses or pipes to pneumatic pump 10 can allow for pumping to efficiently commenced. The inclusion of channels for accommodating forklift tynes within frame 1000 can advantageously allow for transport and positioning of pneumatic pump 10.

It will be appreciated that any suitable material, as will be known to the skilled person, may be used for construction of pneumatic pump 10 or components thereof.

The use of metal, such as stainless steel, or reinforced polymer material, such as fibreglass or graphite reinforced polymers, is considered advantageous for construction of first pressure vessel 100 and second pressure vessel 200. The same or similar material may be advantageous for other components of pneumatic pump 10, such as first and second pneumatic assemblies 300, 400, first and second transfer assemblies 500, 600, and frame 1000.

For at least some pipes and tubes and the like of pneumatic pump 10, such as conduits of pressurised gas manifold 800, plastics or natural or synthetic polymers, such as reinforced natural or synthetic rubber, may be advantageous.

Although any suitable shape may be used for first pressure vessel 100 and second pressure vessel 200 of pneumatic pump 10, substantially disc-like or otherwise spherically derived shape is considered advantageous. Disc-like shape is considered to provide overall benefits in respect of volume, overall size, and width to height ratio. Relatively narrow dimensions of disc-like pressure vessels can be advantageous for minimising overall width of pneumatic pump 10, which may be particularly beneficial when pneumatic pump 10 is deployed in certain space-limited industrial areas.

Typically, first pressure vessel 100 and second pressure vessel 200 have volumes between about 25 and about 500 litres, including about: 30, 40, 50, 60, 70, 80, 90, 100, 150, 200, 250, 300, 350, 400, and 450 litres. More typically, first pressure vessel 100 and second pressure vessel have volumes between about 50 and about 250 litres. The referenced pressure vessel volumes are considered advantageous in the context of pumping at least certain typical industrial slurries.

Suitably, first pneumatic assembly 300 and second pneumatic assembly are high demand pneumatic assemblies. Typically, first pneumatic assembly 300 and second pneumatic assembly 400 are venturi assemblies comprising capacity of between about 10 and about 1500 CFM, including about: 20, 30, 40, 50, 60, 70, 80, 90, 100, 150, 200, 250, 300, 350, 400, 450, 500, 550, 600, 650, 700, 750, 800, 850, 900, 950, 1000, 1100, 1200, 1300, and 1400 CFM. More typically, first pneumatic assembly 300 and second pneumatic assembly 400 comprise venturi capacity between about 40 and about 800 CFM. The referenced venturi capacities are considered advantageous in the context of pumping at least certain typical industrial slurries.

As described herein, rotatable valves, typically ball valves, are used for first pneumatic assembly valve 320, second pneumatic assembly valve 420, first transfer assembly inlet valve 530, first transfer assembly outlet valve 540, second transfer assembly inlet valve 630, second transfer assembly outlet valve 640, depressurisation pneumatic assembly conduit valve 860, and pressurisation pneumatic assembly conduit valve 870.

Although ball valves are typical and considered advantageous, it will be appreciated that other rotatable valve types may potentially be used, such as plug, butterfly, or swing check valves.

In some alternative embodiments, one or more linear valves may be used for pneumatic pump 10, such as for first pneumatic assembly valve 320, second pneumatic assembly valve 420, although without limitation thereto. As will be known to the skilled person, examples of linear valves include gate valves, globe valves, diaphragm valves, pinch valves, and relief valves.

It will be understood that pneumatic pump 10 is adapted to control pneumatic pressure within certain ranges during pumping.

Advantageously, pneumatic controller 700 of pneumatic pump 10 is configured to operate at relatively lower pressure than other components of pneumatic pump 10. This arrangement is adapted to ensure uninterrupted control of pneumatic pump 10 in the presence of pressure fluctuations which are expected during operation.

As hereinabove described, pressurised gas from a pressurised gas source such as pressurised air tubing 1 enters pneumatic controller 700 through controller conduit 840 via controller conduit valve 880, which is a check valve. Advantageously, check valve 880 maintains pressure within a given range in pneumatic controller 700, in the presence of a pressure of pressurised gas entering pneumatic pump 10 that is higher than the pressure in pneumatic controller 700.

Typically, controller 700 is configured to operate at least about 5% lower pressure, more typically at least about 10% lower pressure, than an average pressure of pressurised gas entering pneumatic pump 10 from a pressurised gas source such as pressurised air tubing 1.

Typically, controller 700 is configured to maintain pressure in the controller within a range of about +/- 15%, more typically within a range of about +/- 7.5%.

In some typical embodiments, during operation of pneumatic pump 10 the pressure of pressurised gas entering pneumatic pump 10 from a pressurised gas source such as pressurised air tubing 1 is between about 90 and about 105 pounds per square inch (psi), and controller 700 is configured to maintain pressure in the pneumatic controller of between about 75 and about 85 psi

Advantageously, manifold 800 of pneumatic pump 10 is configured to supply pressurised gas at a higher pressure to first and second pneumatic assemblies 300, 400 for depressurisation of respective pressure vessel 100, 200, relative to the pressure of pressurised gas supplied to first and second pneumatic assemblies 300, 400 for pressurisation of respective pressure vessel 100, 200.

As hereinabove described:
for depressurisation of a respective pressure vessel (100, 200), pressurised gas is directed to a respective pneumatic assembly (300, 400) through depressurisation pneumatic assembly conduit 820 via depressurisation pneumatic assembly conduit valve 860; and
for pressurisation of a respective pressure vessel (100, 200), pressurised gas is directed to a respective pneumatic assembly through pressurisation pneumatic assembly conduit 830 via pressurisation pneumatic assembly conduit valve 870.

It will be appreciated that pressurisation pneumatic assembly conduit valve 870 comprises orifice plate 871, whereas depressurisation pneumatic assembly conduit valve 860 does not comprise a corresponding orifice plate.

It will be further appreciated that orifice plate 871 restricts the flow and resulting pressure of pressurised gas delivered by pressurisation pneumatic assembly conduit 830 to the respective pneumatic assembly (300, 400) for pressurisation of the respective pressure vessel (100, 200), as compared to the flow and resulting pressure of pressurised gas delivered by depressurisation pneumatic assembly conduit 820 to the respective pneumatic assembly (300, 400) for depressurisation of the respective pressure vessel (100, 200).

The above-described arrangements for control of gas, such as air, pressure within components of pneumatic pump 10 have been found to be highly advantageous for maintaining stable and consistent cyclic pumping.

In particular, the above-described arrangements have been found to be surprisingly effective for maintaining consistent cycling control using pneumatic controller 700, and for preventing or substantially minimising slaving of respective first and second pneumatic assemblies 300, 400 during cycling. Consistent control of cycling and minimisation of slaving of linked venturi assemblies were identified as key issues to be addressed to maintain efficient cycling in the context of the present invention, and to limit efficiency loss over time.

Pneumatic controller 700 as described herein advantageously allows for automated cycling, wherein during the first pumping cycle first pressure vessel 100 is filled to a desirable level with pumpable material while second pressure vessel 200 is emptied of pumpable material, then during the second pumping cycle second pressure vessel 200 is filled to a desirable level with pumpable material while second pressure vessel is emptied of pumpable material.

Furthermore, the duration of the pumping cycles can be advantageously be adjusted using controller 700. This can be beneficial for efficient pumping of materials with varying solids content, specific gravity, and viscosity, and to cater for other parameters such as pumping distance and air pressure available on site for powering of pneumatic pump 10.

Generally, it has been observed that pneumatic pump 10 is remarkably effective for substantially continuous pumping of highly heterogenous material, such as solids laden drilling mud.

For example, when using an embodiment of pneumatic pump 10 wherein first pneumatic assembly 300 and second pneumatic assembly 400 comprise venturi capacity of 50 CFM, substantially continuous pumping of highly heterogenous material at a rate of about 36,000 litres per hour (l/h) was achieved, and substantially higher rates should be achievable with larger venturi capacity. This offers significant advantages over any known existing pneumatic pump.

A particular challenge in the context of pneumatic pumping relates to systemic pressure loss that can readily occur during movement or changes of components, and implications thereof when using compressed gas (e.g. compressed air) for both conveying material and controlling cycling.

This challenge relating to systemic pressure loss has been found to be significantly exacerbated in the context of continuous pneumatic pumping using first and second pressure vessels as described herein. The use of high demand pneumatic assemblies (e.g. high demand venturi assemblies) has also been found to significantly exacerbate issues of systemic pressure loss in a cycling context, and particularly in 'dual pressure vessel' arrangements.

Notably, arrangements as described herein, wherein valves are used to maintain various pressure arrangements or pressure differentials in the controller, pressurisation pneumatic assembly conduit, and depressurisation pneumatic assembly conduit, have been found to be highly advantageous for maintaining controlled, continuous pumping despite challenges related to systemic pressure loss, including when using high demand pneumatic assemblies.

Pneumatic pump 10 as described herein is of unitary construction, wherein components including first pressure vessel 100, second pressure vessel 200, first pneumatic assembly 300, second pneumatic assembly 400, first transfer assembly 500, second transfer assembly 600, controller 700, pressurised gas manifold 800, and exhaust component 900 are of a single unit mounted on frame 1000.

It will be readily appreciated, however, that pumps and pumping systems according to embodiments of the invention need not necessarily be of unitary construction. In some alternative embodiments, the pump or pumping system may be of modular construction.

By way of non-limiting example, modular pneumatic pumps or pumping systems according to embodiments invention may be arranged wherein components corresponding to first pressure vessel 100, first pneumatic assembly 300, and first transfer assembly 500 are of a first module such as a first pneumatic pump; and components corresponding to second pressure vessel 200, second pneumatic assembly 400, and second transfer assembly 600 are of a second module such as a second pneumatic pump.

It will be further appreciated that modular pneumatic pumps or pumping systems according to embodiments of the invention may have one or more further module(s) comprising components corresponding to controller 700 and pressurised gas manifold 800. Additional modules may include one or more further modules comprising components corresponding to exhaust component 900 and/or frame 1000.

**In** modular embodiments of the pumps or pumping systems according to embodiments of the invention, suitably, respective modules comprising the first pressure vessel (e.g. a first pneumatic pump) and the second pressure vessel (e.g. a second pneumatic pump) are connected via the controller.

It will be understood generally that the above description of embodiments of the invention is provided for purposes of description to one of ordinary skill in the related art. It is not intended to be exhaustive or to limit the invention to a single disclosed embodiment. In some instances, well-known components and/or processes have not been described in detail, so as not to obscure the embodiments described herein.

As described, numerous alternatives and variations to the present invention will be apparent to those skilled in the art of the above teaching. Accordingly, while some alternative embodiments have been discussed specifically, other embodiments will be apparent or relatively easily developed by those of ordinary skill in the art.

In this specification, the use of the terms *"suitable"* and *"suitably",* and similar terms, is not to be read as implying that a feature or step is essential, although such features or steps may well be preferred.

In this specification, the indefinite articles *"a"* and *"an"* are not to be read as singular indefinite articles, or as otherwise excluding more than one or more than a single subject to which the indefinite article refers. For example, "a" valve includes one valve, one or more valves, and a plurality of valves.

In this specification, the terms *"comprises", "comprising", "includes", "including", "contains", "containing",* and similar terms, are intended to mean a non-exclusive inclusion, such that an apparatus, system, or method that comprises or includes a list of elements need not have those elements solely, and may well have other elements not listed.

In this specification, the terms *"consisting essentially of*" and *"consists essentially of*" are intended to mean a non-exclusive inclusion only to the extent that, if additional elements are included beyond those elements recited, the additional elements do not materially alter basic and novel characteristics. That is, an apparatus, system, or method that *"consists essentially of*" one or more recited elements includes those elements only, or those elements and any additional elements that do not materially alter the basic and novel characteristics of the apparatus, system, or method.

In this specification, terms such as *"above"* and *"below"; "front"* and "*back*"; *"top"* and *"bottom";* "*left*" and *"right"; "horizontal"* and "*vertical*", *"upper"* and *"lower"* and the like, may be used for descriptive purposes. However, it will be understood that embodiments can potentially be arranged in various orientations, and that such relative terms are not limiting and may be interchangeable in appropriate circumstances.

In this specification, unless the context requires otherwise, the terms *"connection", "connected", "connecting",* and the like, are not to be read as limited to direct connections and may also include indirect connections. For example, unless the context requires otherwise, a stated first component *"connected"* to a stated second component may be connected via, through, or by, one or more unstated components.

## Claims

1. A pneumatic pump or pumping system (10) comprising:
a first pressure vessel (100); and a second pressure vessel (200);
a first pneumatic assembly (300) in flowable connection with the first pressure vessel (100), the first pneumatic assembly (300) comprising a first pneumatic assembly valve (320);
a second pneumatic assembly (400) in flowable connection with the second pressure vessel (200), the second pneumatic assembly (400) comprising a second pneumatic assembly valve (420);
a pressurised gas manifold (800) in flowable connection with the first pneumatic assembly (300) and the second pneumatic assembly (400), the pressurised gas manifold (800) comprising one or more depressurisation pneumatic assembly conduits (820) and one or more pressurisation pneumatic assembly conduits (830);
a first transfer assembly (500) in flowable connection with the first pressure vessel (100), the first transfer assembly (500) comprising one or more first transfer assembly valves (530/540);
a second transfer assembly (600) in flowable connection with the second pressure vessel (200), the second transfer assembly (600) comprising one or more second transfer assembly valves (630/640); and
a controller (700) for controlling the first pneumatic assembly valve (320), the second pneumatic assembly valve (420), the one or more first transfer assembly valves (530/540), and the one or more second transfer assembly valves (630/640), wherein the controller (700) is adapted to cycle the pump or system (10) between:
a first pumping cycle wherein the pump or system (10) is configured to urge pumpable material towards the first pressure vessel (100) and away from the second pressure vessel (200), and
a second pumping cycle wherein the pump or system (10) is configured to urge pumpable material towards the second pressure vessel (200) and away from the first pressure vessel (100), wherein:
in the first pumping cycle, the pressurised gas manifold (800) is adapted to deliver:
a relatively higher rate or volume of gas flow via the one or more depressurisation pneumatic assembly conduits (820) to the first pneumatic assembly (300) to depressurise the first pressure vessel (100); and
a relatively lower rate or volume of gas flow via the one or more pressurisation pneumatic assembly conduits (830) to the second pneumatic assembly (400) to pressurise the second pressure vessel (200), and
in the second pumping cycle, the pressurised gas manifold (800) is adapted to deliver:
a relatively higher rate or volume of gas flow via the one or more depressurisation pneumatic assembly conduits (820) to the second pneumatic assembly (400) to depressurise the second pressure vessel (200); and
a relatively lower rate or volume of gas flow via the one or more pressurisation pneumatic assembly conduits (830) to the first pneumatic assembly to pressurise the first pressure vessel (100).

2. The pump or system (10) of claim 1, wherein first transfer assembly valves (530/540) and the second transfer assembly valves (630/640) comprise a first transfer assembly inlet valve (530) and a second transfer assembly inlet valve (630); and a first transfer assembly outlet valve (540) and a second transfer assembly outlet valve (640).

3. The pump or system (10) of claim 1 or claim 2, wherein the first pressure vessel (100) comprises a pressure port (110) located towards an upper portion of the first pressure vessel (100) and the second pressure vessel (200) comprises a pressure port (210) located towards an upper portion of the second pressure vessel (200), wherein the first pneumatic assembly (300) is in flowable connection with the pressure port (110) of the first pressure (100) vessel and the second pneumatic assembly (400) is in flowable connection with the pressure port (210) of the second pressure vessel (200); and the first pressure vessel (100) comprises a transfer port (120) located towards a lower portion of the first pressure vessel (100) and the second pressure vessel (200) comprises a transfer port (220) located towards a lower portion of the second pressure vessel (200), wherein the first transfer assembly (500) is in flowable connection with the transfer port (120) of the first pressure vessel (100) and the second transfer assembly (600) is in flowable connection with the transfer port (220) of the second pressure vessel (200).

4. The pump or system (10) of any preceding claim, wherein the first pressure vessel (100) and the second pressure vessel (200) are of substantially the same size and shape such as a spherically-derived or disc-like shape, optionally wherein the first pressure vessel (100) and the second pressure vessel (200) are substantially paired and/or in a substantially mirrored arrangement.

5. The pump or system (10) of any preceding claim, wherein the first pressure vessel (100) and the second pressure vessel (200) each comprise a capacity of between about 25 and about 500 litres, or between about 50 and about 250 litres.

6. The pump or system (10) of any preceding claim, wherein the first pneumatic assembly (300) and the second pneumatic (400) are venturi assemblies, optionally wherein the venturi assemblies each comprises a capacity of between about 10 and about 1500 CFM, or between about 40 and about 800 CFM.

7. The pump or system (10) of any preceding claim, wherein:
an inlet (510) and an outlet (520) of the first transfer assembly (500) are in flowable connection with the first pressure vessel (100) via a branched conduit (5000); and
an inlet (610) and an outlet (620) of the second transfer assembly (600) are in flowable connection with the second pressure vessel (200) via a branched conduit (6000).

8. The pump or system (10) of any preceding claim, wherein the one or more valves (530/540) of the first transfer assembly (500) and the one or more valves (630/640) of the second transfer assembly (600) are rotatable valves, such as ball valves.

9. The pump or system (10) of any preceding claim, wherein the first transfer assembly (500) comprises a first pneumatic actuator (550); and the second transfer assembly (600) comprises a second pneumatic actuator (650), wherein:
the pneumatic actuator (550) of the first transfer assembly (500) is adapted to concurrently convert an inlet valve (530) of the first transfer assembly (500) to an open position and an outlet valve (540) of the first transfer assembly (500) to a closed position, and
the pneumatic actuator (650) of the second transfer assembly (600) is adapted to concurrently convert an inlet valve (630) of the second transfer assembly (600) to an open position and an outlet valve (640) of the second transfer assembly (600) to a closed position.

10. The pump or system (10) of any preceding claim, wherein the controller (700) is a pneumatic controller, optionally wherein the pneumatic controller comprises or is connected with a pressure regulator (780) and/or a check valve (880).

11. The pump or system (10) of any preceding claim, wherein the pressurisation pneumatic assembly conduit (830) and/or a pressurisation pneumatic assembly conduit valve (870) in flowable connection therewith is adapted to restrict passage of gas through the pressurisation assembly conduit (830), relative to passage of gas through the depressurisation pneumatic assembly conduit (820).

12. A method of pumping pumpable material including cycling a pump or pumping system (10) between a first pumping cycle and a second pumping cycle using a controller (700) and a pressurised gas manifold (800) comprising one or more depressurisation pneumatic assembly conduits (820) and one or more pressurisation pneumatic assembly conduits (830), wherein:
the first pumping cycle includes steps of:
depressurising a first pressure vessel (100) with a first pneumatic assembly (300) in flowable connection with the first pressure vessel (100); and
pressurising a second pressure vessel (200) with a second pneumatic assembly (400) in flowable connection with the second pressure vessel (200), wherein
the pumpable material is urged towards the first pressure vessel (100) and away from the second pressure vessel (200) during the first pumping cycle, and
the second pumping cycle includes steps of:
pressurising the first pressure vessel (100) with the first pneumatic assembly (300); and
depressurising the second pressure vessel (200) with the second pneumatic assembly (400), wherein
the pumpable material is urged away from the first pressure vessel (100) and towards the second pressure vessel (200) during the second pumping cycle, and wherein:
in the first pumping cycle, the pressurised gas manifold (800) is adapted to deliver:
a relatively higher rate or volume of gas flow via the one or more depressurisation pneumatic assembly conduits (820) to the first pneumatic assembly (300) to depressurise the first pressure vessel (100); and
a relatively lower rate or volume of gas flow via the one or more pressurisation pneumatic assembly conduits (830) to the second pneumatic assembly (400) to pressurise the second pressure vessel (200), and
in the second pumping cycle, the pressurised gas manifold (800) is adapted to deliver:
a relatively higher rate or volume of gas flow via the one or more depressurisation pneumatic assembly conduits (820) to the second pneumatic assembly (400) to depressurise the second pressure vessel (200); and
a relatively lower rate or volume of gas flow via the one or more pressurisation pneumatic assembly conduits (830) to the first pneumatic assembly (300) to pressurise the first pressure vessel (100).

13. The method of claim 12, wherein the pumpable material is selected from mining material, such as drilling mud; petrochemical material, such as petrochemical sludge; and wastewater material, such as primary or secondary wastewater sludge.

14. The method of claim 12 or claim 13, wherein the controller (700) is a pneumatic controller, optionally wherein the pneumatic controller comprises or is connected with a pressure regulator (780) and/or a check valve (880).

15. The pump or system (10) of claim 10 or the method of claim 14, wherein a pressure of pressurised gas within the pressurised gas manifold (800) during the first and second pumping cycles is greater than a pressure of pressurised gas within the pneumatic controller (700).

## Patentansprüche

1. Pneumatische Pumpe oder pneumatisches Pumpsystem (10), umfassend:
einen ersten Druckbehälter (100) und einen zweiten Druckbehälter (200),
eine erste pneumatische Baugruppe (300) in strömungsdurchlässiger Verbindung mit dem ersten Druckbehälter (100), wobei die erste pneumatische Baugruppe (300) ein Ventil (320) für die erste pneumatische Baugruppe umfasst,
eine zweite pneumatische Baugruppe (400) in strömungsdurchlässiger Verbindung mit dem zweiten Druckbehälter (200), wobei die zweite pneumatische Baugruppe (400) ein Ventil (420) für die zweite pneumatische Baugruppe umfasst,
einen Druckgasverteiler (800) in strömungsdurchlässiger Verbindung mit der ersten pneumatischen Baugruppe (300) und der zweiten pneumatischen Baugruppe (400), wobei der Druckgasverteiler (800) eine oder mehrere Druckentlastungsleitung(en) (820) für die pneumatische Baugruppe und eine oder mehrere Druckbeaufschlagungsleitung(en) (830) für die pneumatische Baugruppe umfasst,
eine erste Transferanordnung (500) in strömungsdurchlässiger Verbindung mit dem ersten Druckbehälter (100), wobei die erste Transferanordnung (500) ein oder mehrere Ventil(e) (530/540) für die erste Transferanordnung umfasst,
eine zweite Transferanordnung (600) in strömungsdurchlässiger Verbindung mit dem zweiten Druckbehälter (200), wobei die zweite Transferanordnung (600) ein oder mehrere Ventil(e) (630/640) für die zweite Transferanordnung umfasst, und
eine Steuerung (700) zum Steuern des Ventils (320) der ersten pneumatischen Baugruppe, des Ventils (420) der zweiten pneumatischen Baugruppe, des einen Ventils oder der mehreren Ventile (530/540) der ersten Transferbaugruppe sowie des einen Ventils oder der mehreren Ventile (630/640) der zweiten Transferbaugruppe, wobei die Steuerung (700) dazu ausgelegt ist, die Pumpe oder das System (10) zwischen folgenden Vorgängen umzuschalten:
einem ersten Pumpzyklus, bei dem die Pumpe oder das System (10) dazu konfiguriert ist, pumpbares Material zu dem ersten Druckbehälter (100) hin und von dem zweiten Druckbehälter (200) weg zu drücken, und
einem zweiten Pumpzyklus, bei dem die Pumpe oder das System (10) dazu konfiguriert ist, pumpbares Material zu dem zweiten Druckbehälter (200) hin und von dem ersten Druckbehälter (100) weg zu drücken, wobei:
in dem ersten Pumpzyklus der Druckgasverteiler (800) dazu ausgelegt ist, Folgendes zu liefern:
eine relativ höhere Rate oder ein höheres Volumen an Gasstrom über die eine oder die mehreren Druckentlastungsleitung(en) (820) der pneumatischen Baugruppe zu der ersten pneumatischen Baugruppe (300), um den ersten Druckbehälter (100) zu entlasten, und
eine relativ geringere Rate oder ein geringeres Volumen an Gasstrom über die eine oder die mehreren Druckbeaufschlagungsleitung(en) (830) der pneumatischen Baugruppe zu der zweiten pneumatischen Baugruppe (400), um den zweiten Druckbehälter (200) unter Druck zu setzen, und wobei
in dem zweiten Pumpzyklus der Druckgasverteiler (800) dazu ausgelegt ist, Folgendes zu liefern:
eine relativ höhere Rate oder ein höheres Volumen an Gasstrom über die eine oder die mehreren Druckentlastungsleitung(en) (820) der pneumatischen Baugruppe zu der zweiten pneumatischen Baugruppe (400), um den zweiten Druckbehälter (200) zu entlasten, und
eine relativ geringere Rate oder ein geringeres Volumen an Gasstrom über die eine oder die mehreren Druckbeaufschlagungsleitung(en) (830) der pneumatischen Baugruppe zu der ersten pneumatischen Baugruppe, um den ersten Druckbehälter (100) unter Druck zu setzen.

2. Pumpe oder System (10) nach Anspruch 1, wobei die Ventile (530/540) der ersten Transferanordnung und die Ventile (630/640) der zweiten Transferanordnung ein Einlassventil (530) der ersten Transferanordnung und ein Einlassventil (630) der zweiten Transferanordnung sowie ein Auslassventil (540) der ersten Transferanordnung und ein Auslassventil (640) der zweiten Transferanordnung umfassen.

3. Pumpe oder System (10) nach Anspruch 1 oder Anspruch 2, wobei der erste Druckbehälter (100) einen Druckanschluss (110) umfasst, der an einem oberen Abschnitt des ersten Druckbehälters (100) angeordnet ist, und der zweite Druckbehälter (200) einen Druckanschluss (210) umfasst, der an einem oberen Abschnitt des zweiten Druckbehälters (200) angeordnet ist, wobei die erste pneumatische Baugruppe (300) in strömungsdurchlässiger Verbindung mit dem Druckanschluss (110) des ersten Druckbehälters (100) steht und die zweite pneumatische Baugruppe (400) in strömungsdurchlässiger Verbindung mit dem Druckanschluss (210) des zweiten Druckbehälters (200) steht, und wobei der erste Druckbehälter (100) einen Transferanschluss (120) umfasst, der an einem unteren Abschnitt des ersten Druckbehälters (100) angeordnet ist, und der zweite Druckbehälter (200) einen Transferanschluss (220) umfasst, der an einem unteren Abschnitt des zweiten Druckbehälters (200) angeordnet ist, wobei die erste Transferanordnung (500) in strömungsdurchlässiger Verbindung mit dem Transferanschluss (120) des ersten Druckbehälters (100) steht und die zweite Transferanordnung (600) in strömungsdurchlässiger Verbindung mit dem Transferanschluss (220) des zweiten Druckbehälters (200) steht.

4. Pumpe oder System (10) nach einem der vorhergehenden Ansprüche, wobei der erste Druckbehälter (100) und der zweite Druckbehälter (200) im Wesentlichen die gleiche Größe und Form aufweisen, beispielsweise eine von einer Kugel abgeleitete oder eine scheibenartige Form, wobei der erste Druckbehälter (100) und der zweite Druckbehälter (200) optional im Wesentlichen als Paar und/oder in einer im Wesentlichen spiegelbildlichen Anordnung vorliegen.

5. Pumpe oder System (10) nach einem der vorhergehenden Ansprüche, wobei der erste Druckbehälter (100) und der zweite Druckbehälter (200) jeweils ein Fassungsvermögen zwischen etwa 25 und etwa 500 Litern oder zwischen etwa 50 und etwa 250 Litern aufweisen.

6. Pumpe oder System (10) nach einem der vorhergehenden Ansprüche, wobei die erste pneumatische Baugruppe (300) und die zweite pneumatische Baugruppe (400) Venturi-Baugruppen sind, wobei die Venturi-Baugruppen optional jeweils eine Kapazität zwischen etwa 10 und etwa 1500 Kubikfuß pro Minute oder zwischen etwa 40 und etwa 800 Kubikfuß pro Minute aufweisen.

7. Pumpe oder System (10) nach einem der vorhergehenden Ansprüche, wobei:
ein Einlass (510) und ein Auslass (520) der ersten Transferanordnung (500) über eine verzweigte Leitung (5000) in strömungsdurchlässiger Verbindung mit dem ersten Druckbehälter (100) stehen und
ein Einlass (610) und ein Auslass (620) der zweiten Transferanordnung (600) über eine verzweigte Leitung (6000) in strömungsdurchlässiger Verbindung mit dem zweiten Druckbehälter (200) stehen.

8. Pumpe oder System (10) nach einem der vorhergehenden Ansprüche, wobei das eine oder die mehreren Ventil(e) (530/540) der ersten Transferbaugruppe (500) und das eine oder die mehreren Ventil(e) (630/640) der zweiten Transferbaugruppe (600) drehbare Ventile sind, beispielsweise Kugelventile.

9. Pumpe oder System (10) nach einem der vorhergehenden Ansprüche, wobei die erste Transferbaugruppe (500) ein erstes pneumatisches Stellglied (550) umfasst und die zweite Transferbaugruppe (600) ein zweites pneumatisches Stellglied (650) umfasst, wobei:
das pneumatische Stellglied (550) der ersten Transferbaugruppe (500) dazu ausgelegt ist, gleichzeitig ein Einlassventil (530) der ersten Transferbaugruppe (500) in eine offene Stellung und ein Auslassventil (540) der ersten Transferbaugruppe (500) in eine geschlossene Stellung zu überführen, und wobei
das pneumatische Stellglied (650) der zweiten Transferbaugruppe (600) dazu ausgelegt ist, gleichzeitig ein Einlassventil (630) der zweiten Transferbaugruppe (600) in eine offene Stellung und ein Auslassventil (640) der zweiten Transferbaugruppe (600) in eine geschlossene Stellung zu überführen.

10. Pumpe oder System (10) nach einem der vorhergehenden Ansprüche, wobei die Steuerung (700) eine pneumatische Steuerung ist, wobei die pneumatische Steuerung optional einen Druckregler (780) und/oder ein Rückschlagventil (880) umfasst oder mit einem solchen verbunden ist.

11. Pumpe oder System (10) nach einem der vorhergehenden Ansprüche, wobei die Druckbeaufschlagungsleitung (830) der pneumatischen Baugruppe und/oder ein damit in strömungsdurchlässiger Verbindung stehendes Ventil (870) für die Druckbeaufschlagungsleitung der pneumatischen Baugruppe dafür ausgelegt ist, den Gasdurchgang durch die Druckbeaufschlagungsleitung (830) der pneumatischen Baugruppe im Verhältnis zum Gasdurchgang durch die Druckentlastungsleitung (820) der pneumatischen Baugruppe zu beschränken.

12. Verfahren zum Pumpen von pumpbarem Material, welches das Umschalten einer Pumpe oder eines Pumpsystems (10) zwischen einem ersten Pumpzyklus und einem zweiten Pumpzyklus unter Verwendung einer Steuerung (700) und eines Druckgasverteilers (800) umfasst, der eine oder mehrere Druckentlastungsleitung(en) (820) für die pneumatische Baugruppe und eine oder mehrere Druckbeaufschlagungsleitung(en) (830) für die pneumatische Baugruppe umfasst, wobei:
der erste Pumpzyklus folgende Schritte umfasst:
Entlasten des Drucks in einem ersten Druckbehälter (100) mittels einer ersten pneumatischen Baugruppe (300) in strömungsdurchlässiger Verbindung mit dem ersten Druckbehälter (100) und
Beaufschlagen eines zweiten Druckbehälters (200) mit Druck mittels einer zweiten pneumatischen Baugruppe (400) in strömungsdurchlässiger Verbindung mit dem zweiten Druckbehälter (200), wobei
das pumpbare Material während des ersten Pumpzyklus zu dem ersten Druckbehälter (100) hin und von dem zweiten Druckbehälter (200) weg gedrückt wird, und wobei
der zweite Pumpzyklus folgende Schritte umfasst:
Beaufschlagen des ersten Druckbehälters (100) mit Druck mittels der ersten pneumatischen Baugruppe (300), und
Entlasten des Drucks in dem zweiten Druckbehälter (200) mittels der zweiten pneumatischen Baugruppe (400), wobei
das pumpbare Material während des zweiten Pumpzyklus von dem ersten Druckbehälter (100) weg und zu dem zweiten Druckbehälter (200) hin gedrückt wird, und wobei:
in dem ersten Pumpzyklus der Druckgasverteiler (800) dazu ausgelegt ist, Folgendes zu liefern:
eine relativ höhere Rate oder ein höheres Volumen an Gasstrom über die eine oder die mehreren Druckentlastungsleitung(en) (820) der pneumatischen Baugruppe zu der ersten pneumatischen Baugruppe (300), um den ersten Druckbehälter (100) von Druck zu entlasten, und
eine relativ geringere Rate oder ein geringeres Volumen an Gasstrom über die eine oder die mehreren Druckbeaufschlagungsleitung(en) (830) der pneumatischen Baugruppe zu der zweiten pneumatischen Baugruppe (400), um den zweiten Druckbehälter (200) unter Druck zu setzen, und wobei
in dem zweiten Pumpzyklus der Druckgasverteiler (800) dazu ausgelegt ist, Folgendes zu liefern:
eine relativ höhere Rate oder ein höheres Volumen an Gasstrom über die eine oder die mehreren Druckentlastungsleitung(en) (820) der pneumatischen Baugruppe zu der zweiten pneumatischen Baugruppe (400), um den zweiten Druckbehälter (200) von Druck zu entlasten, und
eine relativ geringere Rate oder ein geringeres Volumen an Gasstrom über die eine oder die mehreren Druckbeaufschlagungsleitung(en) (830) zu der ersten pneumatischen Baugruppe (300), um den ersten Druckbehälter (100) unter Druck zu setzen.

13. Verfahren nach Anspruch 12, wobei das pumpbare Material ausgewählt ist aus Bergbaumaterial wie etwa Bohrschlamm, petrochemischem Material wie etwa petrochemischem Schlamm, und Abwassermaterial wie etwa primärem oder sekundärem Abwasserschlamm.

14. Verfahren nach Anspruch 12 oder Anspruch 13, wobei die Steuerung (700) eine pneumatische Steuerung ist, wobei die pneumatische Steuerung optional einen Druckregler (780) und/oder ein Rückschlagventil (880) umfasst oder mit einem solchen verbunden ist.

15. Pumpe oder System (10) nach Anspruch 10 oder Verfahren nach Anspruch 14, wobei ein Druck des unter Druck stehenden Gases in dem Druckgasverteiler (800) während des ersten und zweiten Pumpzyklus größer ist als ein Druck des unter Druck stehenden Gases in der pneumatischen Steuerung (700).

## Revendications

1. Pompe ou système de pompage pneumatique (10), comprenant :
un premier récipient sous pression (100) et un second récipient sous pression (200),
un premier assemblage pneumatique (300) en connexion fluide avec le premier récipient sous pression (100), le premier assemblage pneumatique (300) comprenant une vanne (320) du premier assemblage pneumatique;
un second assemblage pneumatique (400) en connexion fluide avec le second récipient sous pression (200), le second assemblage pneumatique (400) comprenant une vanne (420) du second assemblage pneumatique;
un distributeur de gaz comprimé (800) en connexion fluide avec le premier assemblage pneumatique (300) et le second assemblage pneumatique (400), le distributeur de gaz comprimé (800) comprenant un ou plusieurs conduit(s) d'assemblage pneumatique de dépressurisation (820) et un ou plusieurs conduit(s) d'assemblage pneumatique de pressurisation (830);
un premier assemblage de transfert (500) en connexion fluide avec le premier récipient sous pression (100), le premier assemblage de transfert (500) comprenant une ou plusieurs vanne(s) (530/540) du premier assemblage de transfert;
un second assemblage de transfert (600) en connexion fluide avec le second récipient sous pression (200), le second assemblage de transfert (600) comprenant une ou plusieurs vanne(s) (630/640) du second assemblage de transfert; et
un contrôleur (700) pour commander la vanne (320) du premier assemblage pneumatique, la vanne (420) du second assemblage pneumatique, la ou les vanne(s) (530/540) du premier assemblage de transfert et la ou les vanne(s) (630/640) du second assemblage de transfert, le contrôleur (700) étant configuré pour commuter la pompe ou le système (10) entre les opérations suivantes :
un premier cycle de pompage dans lequel la pompe ou le système (10) est configuré pour pousser le matériau pompable vers le premier récipient sous pression (100) et loin du second récipient sous pression (200), et
un second cycle de pompage dans lequel la pompe ou le système (10) est configuré pour pousser le matériau pompable vers le second récipient sous pression (200) et loin du premier récipient sous pression (100), dans lequel:
lors du premier cycle de pompage, le distributeur de gaz sous pression (800) est adapté pour délivrer:
un débit ou un volume de gaz relativement plus élevé via un ou plusieurs conduit(s) d'assemblage pneumatique de dépressurisation (820) vers le premier assemblage pneumatique (300) pour dépressuriser le premier récipient sous pression (100), et
un débit ou un volume de gaz relativement plus faible via un ou plusieurs conduit(s) d'assemblage pneumatique de pressurisation (830) vers le second assemblage pneumatique (400) pour pressuriser le second récipient sous pression (200), et
lors du second cycle de pompage, le distributeur de gaz sous pression (800) est adapté pour délivrer:
un débit ou un volume de gaz relativement plus élevé via un ou plusieurs conduit(s) d'assemblage pneumatique de dépressurisation (820) vers le second assemblage pneumatique (400) pour dépressuriser le second récipient sous pression (200), et
un débit ou un volume de gaz relativement plus faible via un ou plusieurs conduit(s) d'assemblage pneumatique de pressurisation (830) vers le premier assemblage pneumatique pour pressuriser le premier récipient sous pression (100).

2. Pompe ou système (10) selon la revendication 1, dans lequel les vannes (530/540) du premier assemblage de transfert et les vannes (630/640) du second assemblage de transfert comprennent une vanne d'entrée (530) du premier assemblage de transfert et une vanne d'entrée (630) du second assemblage de transfert, et une vanne de sortie (540) du premier assemblage de transfert et une vanne de sortie (640) du second assemblage de transfert.

3. Pompe ou système (10) selon la revendication 1 ou la revendication 2, dans lequel le premier récipient sous pression (100) comprend un orifice de pression (110) situé vers une partie supérieure du premier récipient sous pression (100) et le second récipient sous pression (200) comprend un orifice de pression (210) situé vers une partie supérieure du second récipient sous pression (200); dans lequel le premier assemblage pneumatique (300) est en connexion fluide avec l'orifice de pression (110) du premier récipient sous pression (100) et le second assemblage pneumatique (400) est en connexion fluide avec l'orifice de pression (210) du second récipient sous pression (200); et dans lequel le premier récipient sous pression (100) comprend un orifice de transfert (120) situé vers une partie inférieure du premier récipient sous pression (100) et le second récipient sous pression (200) comprend un orifice de transfert (220) situé vers une partie inférieure du second récipient sous pression (200), le premier assemblage de transfert (500) étant en connexion fluide avec l'orifice de transfert (120) du premier récipient sous pression (100) et le second assemblage de transfert (600) étant en connexion fluide avec l'orifice de transfert (220) du second récipient sous pression (200).

4. Pompe ou système (10) selon l'une quelconque des revendications précédentes, dans lequel le premier récipient sous pression (100) et le second récipient sous pression (200) sont sensiblement de la même taille et de la même forme, par exemple une forme sphérique ou en forme de disque, éventuellement dans lequel le premier récipient sous pression (100) et le second récipient sous pression (200) sont présents sensiblement par paires et/ou dans un agencement sensiblement en miroir.

5. Pompe ou système (10) selon l'une quelconque des revendications précédentes, dans lequel le premier récipient sous pression (100) et le second récipient sous pression (200) ont chacun une capacité comprise entre environ 25 et environ 500 litres, ou entre environ 50 et environ 250 litres.

6. Pompe ou système (10) selon l'une quelconque des revendications précédentes, dans lequel le premier assemblage pneumatique (300) et le second assemblage pneumatique (400) sont des assemblages Venturi, les assemblages Venturi comprenant éventuellement chacun une capacité comprise entre environ 10 et environ 1500 pieds cubes par minute, ou entre environ 40 et environ 800 pieds cubes par minute.

7. Pompe ou système (10) selon l'une quelconque des revendications précédentes, dans lequel:
une entrée (510) et une sortie (520) du premier assemblage de transfert (500) sont en connexion fluide avec le premier récipient sous pression (100) par l'intermédiaire d'un conduit ramifié (5000); et
une entrée (610) et une sortie (620) du second assemblage de transfert (600) sont en connexion fluide avec le second récipient sous pression (200) par l'intermédiaire d'un conduit ramifié (6000).

8. Pompe ou système (10) selon l'une quelconque des revendications précédentes, dans lequel la ou les vanne(s) (530/540) du premier assemblage de transfert (500) et la ou les vanne(s) (630/640) du second assemblage de transfert (600) sont des vannes rotatives, telles que des vannes sphériques.

9. Pompe ou système (10) selon l'une quelconque des revendications précédentes, dans lequel le premier assemblage de transfert (500) comprend un premier actionneur pneumatique (550) et le second assemblage de transfert (600) comprend un second actionneur pneumatique (650), dans lequel :
l'actionneur pneumatique (550) du premier assemblage de transfert (500) est adapté pour déplacer simultanément une vanne d'entrée (530) du premier assemblage de transfert (500) en position ouverte et une vanne de sortie (540) du premier assemblage de transfert (500) en position fermée; et
l'actionneur pneumatique (650) du second assemblage de transfert (600) est adapté pour déplacer simultanément une vanne d'entrée (630) du second assemblage de transfert (600) en position ouverte et une vanne de sortie (640) du second assemblage de transfert (600) en position fermée.

10. Pompe ou système (10) selon l'une quelconque des revendications précédentes, dans lequel le contrôleur (700) est un contrôleur pneumatique, éventuellement dans lequel le contrôleur pneumatique comprend ou est connecté à un régulateur de pression (780) et/ou un clapet anti-retour (880).

11. Pompe ou système (10) selon l'une quelconque des revendications précédentes, dans lequel le conduit d'assemblage pneumatique de pressurisation (830) et/ou une vanne (870) de conduit d'assemblage pneumatique de pressurisation en connexion fluide avec celui-ci est adapté pour restreindre le passage de gaz à travers le conduit d'assemblage pneumatique de pressurisation (830) par rapport au passage de gaz à travers le conduit d'assemblage pneumatique de dépressurisation (820).

12. Procédé de pompage de matériau pompable, comprenant la commutation d'une pompe ou d'un système de pompage (10) entre un premier cycle de pompage et un second cycle de pompage à l'aide d'un contrôleur (700) et d'un distributeur de gaz sous pression (800) comprenant un ou plusieurs conduit(s) d'assemblage pneumatique de dépressurisation (820) et un ou plusieurs conduit(s) d'assemblage pneumatique de pressurisation (830), dans lequel:
le premier cycle de pompage comprend les étapes suivantes:
dépressuriser un premier récipient sous pression (100) au moyen d'un premier assemblage pneumatique (300) en connexion fluide avec le premier récipient sous pression (100); et
pressuriser un second récipient sous pression (200) au moyen d'un second assemblage pneumatique (400) en connexion fluide avec le second récipient sous pression (200);
le matériau pompable étant poussé vers le premier récipient sous pression (100) et éloigné du second récipient sous pression (200) pendant le premier cycle de pompage; et dans lequel
le second cycle de pompage comprend les étapes suivantes:
pressuriser le premier récipient sous pression (100) au moyen du premier assemblage pneumatique (300); et
dépressuriser le second récipient sous pression (200) au moyen du second assemblage pneumatique (400);
le matériau pompable étant éloigné du premier récipient sous pression (100) et poussé vers le second récipient sous pression (200) pendant le second cycle de pompage; et dans lequel:
lors du premier cycle de pompage, le distributeur de gaz sous pression (800) est adapté pour délivrer:
un débit ou un volume de gaz relativement plus élevé via un ou plusieurs conduit(s) d'assemblage pneumatique de dépressurisation (820) vers le premier assemblage pneumatique (300) pour dépressuriser le premier récipient sous pression (100), et
un débit ou un volume de gaz relativement plus faible via un ou plusieurs conduit(s) d'assemblage pneumatique de pressurisation (830) vers le second assemblage pneumatique (400) pour pressuriser le second récipient sous pression (200), et
lors du second cycle de pompage, le distributeur de gaz sous pression (800) est adapté pour délivrer:
un débit ou un volume de gaz relativement plus élevé via un ou plusieurs conduit(s) d'assemblage pneumatique de dépressurisation (820) vers le second assemblage pneumatique (400) pour dépressuriser le second récipient sous pression (200), et
un débit ou un volume de gaz relativement plus faible via un ou plusieurs conduit(s) d'assemblage pneumatique de pressurisation (830) vers le premier assemblage pneumatique (300) pour pressuriser le premier récipient sous pression (100).

13. Procédé selon la revendication 12, dans lequel le matériau pompable est choisi parmi les matériaux miniers tel que de la boue de forage, les matériaux pétrochimiques tel que des boues pétrochimiques, et les matériaux d'eaux usées tel que des boues d'eaux usées primaires ou secondaires.

14. Procédé selon la revendication 12 ou la revendication 13, dans lequel le contrôleur (700) est un contrôleur pneumatique, éventuellement dans lequel le contrôleur pneumatique comprend ou est connecté à un régulateur de pression (780) et/ou à un clapet anti-retour (880).

15. Pompe ou système (10) selon la revendication 10 ou procédé selon la revendication 14, dans lequel une pression de gaz sous pression à l'intérieur du distributeur de gaz sous pression (800) pendant les premier et second cycles de pompage est supérieure à une pression du gaz sous pression à l'intérieur du contrôleur pneumatique (700).
